# EUROPÄISCHE PATENTANMELDUNG

(11) **EP 4 300 228 A1**
(43) Veröffentlichungstag der Anmeldung: **03.01.2024**
(21) Anmeldenummer: 23181707.3
(22) Anmeldetag: 27.06.2023
(51) Int. Cl.: G05B 19/418, B65B 25/00, B65B 65/00, B65B 57/16, B65B 3/26

(54) **FÜLLLINIE ZUM HERSTELLEN VON NAHRUNGSMITTELN AUS EINER PASTÖSEN MASSE**

(30) Priorität: 27.06.2022 DE 102022115961
(71) Anmelder: VEMAG Maschinenbau GmbH, 27283 Verden/Aller (DE)
(72) Erfinder: Siegmanski, Karsten, 27283 Verden (DE); Rückershäuser, Florian, 27308 Kirchlinteln (DE); Buhr, Dirk, 29227 Celle (DE)
(74) Vertreter: Eisenführ Speiser

(57) **Zusammenfassung**

Die Erfindung betrifft eine Fülllinie (100, 100') umfassend eine erste Füllmaschine (1) mit einer ersten Maschinensteuerung (2), mindestens einer zweiten Füllmaschine (4) mit einer zweiten Maschinensteuerung (6), die selektiv in Kooperation mit der Füllmaschine (1) und unabhängig von der ersten Füllmaschine (1) betreibbar ist, und eine Datenschnittstelle zum steuerungstechnischen Verbinden der Maschinensteuerungen (2, 4). Die Erfindung schlägt vor, dass die Maschinensteuerungen (2, 4) dazu eingerichtet sind, abhängig von einer bereitgestellten Steuerinformation (S1), entweder in einem Slave-Steuerungsmodus oder in einem Master-Steuerungsmodus reziprok betrieben zu werden. Der Slave-Steuerungsmodus bewirkt eine Übertragung von Lese- und Schreibrechten bezüglich rezeptrelevanter Prozessparameter an die im Master-Steuerungsmodus betriebene Maschinensteuerung (2, 6, 12), und der Master-Steuerungsmodus die Implementierung der übertragenen Lese- und Schreibrechte in die im Master-Steuerungsmodus betriebene Maschinensteuerung (2, 6, 12). Die Erfindung betrifft ferner ein Verfahren (1000, 1000', 2000) zum Betrieb einer solchen Fülllinie (100, 100`).

## Beschreibung

Die Erfindung betrifft eine Fülllinie zum Herstellen von Nahrungsmitteln aus einer pastösen Masse, insbesondere gefüllten Nahrungsmitteln bzw. in Hüllen gefüllten Nahrungsmitteln. Die Fülllinie umfasst dabei eine erste Füllmaschine mit einer ersten Maschinensteuerung, mindestens eine zweite Füllmaschine mit einer zweiten Maschinensteuerung, die selektiv in Kooperation mit der ersten Füllmaschine und unabhängig von der ersten Füllmaschine betreibbar ist, sowie eine Datenschnittstelle zum steuerungstechnischen Verbinden der ersten Maschinensteuerung und der zweiten Maschinensteuerung.

Derartige Fülllinien sind allgemein bekannt. Sie umfassen einen Verbund von mindestens zwei Füllmaschinen und bevorzugt ferner einem oder mehreren Vorsatzgeräten. Vorsatzgeräte für den Einsatz in Fülllinien umfassen beispielsweise Darmhaltevorrichtungen zum automatischen Abdrehen von z. B. Würstchen, Darmaufziehgeräte, Produktformer, Transportvorrichtungen, Aufhängevorrichtungen und Portioniervorrichtungen zur Herstellung von beispielsweise Bällen oder Patties. Zwei oder mehr Füllmaschinen in Verbindung mit einem solchen Vorsatzgerät werden für verschiedene Anwendungen genutzt, wie beispielsweise sogenannte Alginatanwendungen, bei denen eine erste Füllmaschine eine pastöse Masse fördert und eine zweite Füllmaschine ein Alginatgel fördert, welches zum Ummanteln der pastösen Massen verwendet wird. Weiterhin werden zwei Füllmaschinen in Verbindung mit einem solchen Vorsatzgerät auch bei der Koextrusion zum Herstellen von gefüllten Produkten eingesetzt, bei denen die erste Füllmaschine die Hülle des späteren Produktes fördert und die zweite Füllmaschine die Innenfüllung fördert. Weitere Anwendungen für Fülllinie mit zwei oder mehr Füllmaschinen umfassen das Nachportionieren von pastöser Masse bzw. Produkt zur Korrektur des Sollgewichts. Anwendungen solcher Fülllinien mit mehr als zwei Füllmaschinen umfassen beispielsweise die Herstellung von Nahrungsmitteln mit einer Vielzahl unterschiedlicher Füllungen, wie Burritos. Hierbei werden die unterschiedlichen Füllungen von verschiedenen Füllmaschinen bereitgestellt. Derartige Fülllinien und Füllmaschinen sind dabei nicht auf die Herstellung von Nahrungsmitteln beschränkt.

Der gemeinsame Betrieb der ersten Füllmaschine mit mindestens einer zweiten Füllmaschine innerhalb der Fülllinie erfordert zumeist eine exakte Einstellung und Abstimmung beider Maschinen aufeinander für den gemeinsamen Betrieb. Insbesondere rezeptrelevante Prozessparameter werden dabei auch nach der Einrichtung der Maschinen bzw. der Fülllinie oder der Initialisierung neuer Rezepte regelmäßig angepasst und überschrieben. Rezeptrelevante Prozessparameter umfassen Rezeptnummern, welche einzelnen Rezepten und damit in Verbindung stehenden Prozessparametern zugeordnet sind, Geschwindigkeiten, Zielgewichte, Zielgrößen sowie Optionen für die Trichterfüllstandserkennung, Vakuum-, Druck- oder Temperatursteuerungen. Dabei erfordert beispielsweise die Anpassung eines der rezeptrelevanten Prozessparameter an der ersten Maschinensteuerung gleichzeitig eine Anpassung bzw. Überschreibung der mit dem veränderten Prozessparameter assoziierten rezeptrelevanten Prozessparameter der übrigen Maschinen der Fülllinie. Die teils iterative Abstimmung der Maschinen innerhalb der Fülllinie aufeinander macht einen fortlaufenden Zugriff sowohl auf die erste Maschinensteuerung als auch auf die zweite Maschinensteuerung notwendig. Zumindest eine der Maschinensteuerungen der Fülllinie ist für einen Bediener oftmals nur schwer zugänglich aufgrund beschränkter Stellmöglichkeiten und der für den Produktionsprozess notwendigen Anordnung der Maschinen der Fülllinie zueinander.

Aus dem Stand der Technik sind zentrale Steuerungen zum Steuern verschiedener Vorsatzgeräte und Füllmaschinen einer Fülllinie bekannt. Die von dieser zentralen Steuerung angesteuerten Füllmaschinen bzw. zusätzlichen Vorsatzgeräte können nicht ohne besagte zentrale Steuerung betrieben werden, sodass deren Flexibilität hinsichtlich möglicher Maschinenkombinationen stark limitiert ist.

Ferner sind vernetzte Steuerungen von zwei oder mehr Füllmaschinen und teilweise weiteren Vorsatzgeräten einer Fülllinie bekannt, welche allerdings nur eine rudimentäre Abstimmung der Maschinen untereinander ermöglichen. Diese Abstimmung ermöglicht beispielsweise das Abschalten, Pausieren oder Starten einer der beiden Füllmaschinen in Abhängigkeit von dem Betriebszustand der jeweils anderen Füllmaschine. Eine solche Zuordnung bzw. Rangordnung der Steuerungsfunktion wird auch als Master-/Slave-Zuordnung bezeichnet.

Zumal die Zugänglichkeit der ersten Füllmaschine und der zweiten Füllmaschine von der individuellen Produktionsumgebung abhängt, ist es ferner nachteilig, wenn innerhalb der Fülllinie eine feste Zuordnung einer übergeordneten Steuerfunktion zu den zwei oder mehr Füllmaschinen bzw. zu Vorsatzgeräten in Form einer festen Master-/Slave-Zuordnung besteht. Eine solche bereits festgelegte Zuordnung ermöglicht gerade keine flexible Reaktion auf die in der jeweiligen Produktionsumgebung herrschenden Platzverhältnisse, welche sich zuweilen auch ändern können.

Die aus dem Stand der Technik bekannten Lösungen ermöglichen zusammengefasst allerdings keine exakte Abstimmung aller rezeptrelevanten Prozessparameter der zwei oder mehr Füllmaschinen zu Produktionsbeginn, beispielsweise bei einer Veränderung des aktuell produzierten Rezeptes oder auch fortlaufend in Produktionsbetrieb.

Es ist daher Aufgabe der vorliegenden Erfindung, zumindest einen aus dem Stand der Technik bekannten Nachteile zu adressieren. Insbesondere ist Aufgabe der vorliegenden Erfindung, die Flexibilität der Anordnung einer Fülllinie der eingangs genannten Art bei beschränkten Stellmöglichkeiten in der Produktionsumgebung zu verbessern. Gleichzeitig soll dabei die Bedienung verbessert werden und eine vollumfängliche Steuerung mindestens der ersten Füllmaschine und der zweiten Füllmaschine sowohl vor Prozessbeginn als auch während der Produktion stets gewährleistet sein.

Die Erfindung löst die eingangs genannte Aufgabe in einem ersten Aspekt durch eine Fülllinie gemäß Anspruch 1. Insbesondere schlägt die Erfindung vor, dass die erste Maschinensteuerung und die zweite Maschinensteuerung dazu eingerichtet sind, abhängig von einer an der ersten Maschinensteuerung und/oder der zweiten Maschinensteuerung bereitgestellten Steuerinformation entweder in einem Slave-Steuerungsmodus oder in einem Master-Steuerungsmodus reziprok betrieben zu werden. Die erste Maschinensteuerung und die zweite Maschinensteuerung sind im Slave-Steuerungsmodus zur Übertragung von Lese- und Schreibrechten bezüglich rezeptrelevanter Prozessparameter an die im Master-Steuerungsmodus betriebenen Maschinensteuerung eingerichtet. Die Lese- und Schreibrechte sind insbesondere vollumfängliche Lese- und Schreibrechte, welche einen vollständigen Remote-Zugriff auf die Rezepteinstellungen ermöglichen. In den Rezepteinstellungen sind verschiedene Rezepte in Form von rezeptrelevanten Prozessparametern hinterlegt. Derartige Prozessparameter umfassen insbesondere Füllleistungen, Füllgutdruck, Füllguttemperatur, Fülltempo, Füllbeschleunigung, Füllverzögerung, Portionierleistung, Portionierlänge, Portionsverzögerung, Füllantriebslast, Einstellungen zu Gewichtsgruppen, Rücksaugmengen, Zieldruck, Zieltemperatur, Zubringergeschwindigkeit und Zubringermodus (taktend, kontinuierlich, rühren), Zubringervorlauf und -Nachlauf, Beschleunigungs-, Softstart- und Bremsrampen. Im Falle einer Vakuumfüllmaschine umfassen Prozessparameter weitere Einstellungen betreffend das Vakuum der Vakuumpumpe

Die erste Maschinensteuerung und die zweite Maschinensteuerung sind im Master-Steuerungsmodus zur Implementierung der übertragenen Lese- und Schreibrechte eingerichtet. Durch diese Übertragung von Lese- und Schreibrechten, also der steuerungstechnischen Befähigung rezeptrelevante Prozessparameter auszulesen und bei Bedarf zu überschreiben, ist es der Maschinensteuerung im Master-Steuerungsmodus möglich, einen vollumfänglichen Zugriff auf die Maschinensteuerung im Slave-Steuerungsmodus zu erhalten. In vorteilhafter Weise wird durch diese Übertragung und Implementierung der Lese- und Schreibrechte der räumliche Zugang zu der Maschinensteuerung im Slave-Steuerungsmodus sowohl bei Rezeptwechseln als auch im laufenden Betrieb entbehrlich.

Aus den rezeptrelevanten Prozessparametern werden von der ersten und/oder der zweiten Maschinensteuerung die jeweiligen Stellgrößen der Funktionsmodule der ersten Füllmaschine oder der zweiten Füllmaschine abgeleitet. Die Funktionsmodule umfassen beispielsweise einen Zubringerantrieb der Zubringerkurve oder eine Pumpe der Füllmaschine.

In anderen Worten weist die Fülllinie eine erste Füllmaschine und mindestens eine weitere Füllmaschine auf, die beide sowohl zum Betrieb im Master-Steuerungsmodus mit Lese- und Schreibrechten eingerichtet sind als auch zum Betrieb im Slave-Steuerungsmodus, in welchem sie ihre eigenen Lese- und Schreibrechte an die Maschinensteuerung im Master-Steuerungsmodus übertragen haben. In Abhängigkeit der Stellmöglichkeiten der Fülllinie in der Produktionsumgebung kann somit individuell entschieden werden, welche der beiden Maschinensteuerungen von einem Bediener besser zu erreichen ist und bedarfsgerecht mit entsprechenden Lese- und Schreibrechten im Master-Steuerungsmodus auszustatten ist. Bei einer steuerungstechnischen Trennung der ersten Füllmaschine bzw. der zweiten Füllmaschine von der Datenschnittstelle können die beiden Maschinen über die eigene Maschinensteuerung dann allein oder in Kooperation mit anderen Nahrungsmittelmaschinen, beispielsweise zusätzlichen Füllmaschinen oder Vorsatzgeräten betrieben werden.

Die Bereitstellung einer solchen Steuerinformation für eine erfindungsgemäße Fülllinie kann auf verschiedene Weise erfolgen, wie insbesondere in den im Folgenden aufgeführten bevorzugten Ausführungsformen erläutert wird. Insbesondere kann eine solche Steuerinformation durch eine Bedienoberfläche, Schalter, Steck- bzw. Magnet-Kontakte oder RFID bereitgestellt werden. Bei derartigen Steuerinformationen handelt es sich beispielsweise um Steuerbefehle, Steuersignale oder Softwareeinstellungen.

Derartige Maschinensteuerungen umfassen dabei bevorzugt ein Speichermedium, in welchem sämtliche der Prozessparameter rezeptbezogen in den Rezepteinstellungen hinterlegt sind. Die hinterlegten rezeptrelevanten Prozessparameter sind dabei auch abhängig von der jeweiligen Maschinenzusammenstellung der Fülllinie.

Die erste Maschinensteuerung und die zweite Maschinensteuerung sind im Master-Steuerungsmodus bevorzugt dazu eingerichtet, die Stellgrößen der Funktionsmodule der ersten Füllmaschine und der zweiten Füllmaschine aus den rezeptrelevanten Prozessparametern zu berechnen und die Funktionsmodule direkt anzusteuern. Gemäß einer alternativen bevorzugten Ausführungsform ist die Maschinensteuerung im Master-Steuerungsmodus lediglich zum Überschreiben von rezeptrelevanten Prozessparametern und Übertragen dieser Änderungen an die Maschinensteuerung im Slave-Steuerungsmodus eingerichtet. Die erste Maschinensteuerung und die zweite Maschinensteuerung im Slave-Steuerungsmodus sind dabei dazu eingerichtet, Stellgrößen der jeweils eigenen Funktionsmodule aus den übertragenen und überschriebenen Prozessparametern zu berechnen.

Vorzugsweise umfassen die Lese- und Schreibrechte ferner Maschinenkonfigurationen und/oder Betriebsmodi. Ein Beispiel eines Betriebsmodus in Bezug auf eine Füllmaschine ist die Trichterbeschickung, welche über ein Band oder über eine Hebevorrichtung erfolgen kann. Weitere Betriebsmodi umfassen die Betriebsart in Abhängigkeit der Maschinenzusammenstellung und diesbezüglich insbesondere das Füllen, Portionieren, Abdrehen oder auch die Koextrusion. Weiterhin umfassen Maschinenkonfigurationen die Temperierung, die Überwachung beispielsweise des Fülltrichters über Füllstandsensoren sowie Füllstandsmodi, die Vorreinigung von Förderwerk, Fülltrichter, Vakuumbelüftungszeit, Vakuumschwellwerte zum Abschalten der Maschine oder auch Einstellungen für einen Vakuumtrichter und dergleichen. Ferner können auch Maschineneinstellungen zu Sondersteuerungssignalen, beispielsweise über die Verfügbarkeit oder eine aktuell laufende Produktion der jeweiligen Füllmaschine oder Einstellung zu analogen Ausgängen der jeweiligen Füllmaschine z.B. für nachgelagerte Bänder und Einstellungen für die Metallerkennung bereitgestellt werden. Auch können Einstellungen für ein Separier-Ventil bzw. einen Separator der zweiten, im Prozess nachgelagerten Füllmaschine in den Maschinenkonfigurationen hinterlegt sein. Durch die Lese- und Schreibrechte der im Master-Steuerungsmodus betriebenen Maschinensteuerung wird die Steuerung der Fülllinie weiter optimiert. Die Steuerung der Fülllinie kann nunmehr auch hinsichtlich der Maschinenkonfiguration und Betriebsmodi einzig durch eine im Master-Steuerungsmodus betriebene Maschinensteuerung vollständig eingestellt und bei Bedarf überschrieben werden. Ein Teil der Maschinenkonfigurationen und Betriebsmodi hat dabei auch direkten Einfluss auf das hergestellte Lebensmittelprodukt und diese lassen sich daher mit den rezeptrelevanten Prozessparametern als sogenannte Rezeptparameter zusammenfassen. Ein Beispiel für derartige Maschinenkonfigurationen sind die Einstellungen für ein Separier-Ventil. Durch die Erfindung wird vollumfänglicher Zugriff auf sämtliche Rezeptparameter ermöglicht. Durch den Zugriff auf die Maschinenkonfigurationen wird darüber hinaus auch hinsichtlich etwaiger Überwachungsfunktionalitäten, beispielsweise der Überwachung des Fülltrichters über Füllstandsensoren, die Systemsicherheit erhöht.

Weiter bevorzugt umfassen die Leserechte eine Zustandsüberwachung der jeweiligen im Slave-Steuerungsmodus betriebenen Füllmaschine und/oder die Prozessüberwachung der gesamten Fülllinie. Bei der Zustandsüberwachung können aktuelle Informationen in Bezug auf den Prozess der jeweiligen Maschine mithilfe von bereits integrierten oder nachzurüstenden Sensoren erfasst werden. Hierfür ist nicht immer eine Aufrüstung bestehender Maschinen notwendig, da auch bereits Stromverbräuche zum Informationsgewinn für eine Zustandsüberwachung genutzt werden können. Von Interesse sind dabei alle Informationen, durch die eine Abweichung vom gewünschten Prozess registrierbar ist. Dies können Temperatur-, Strom- und Betriebsmittelverbrauchs- sowie Eigenschwingungs- oder Durchflussschwankungen sein. Die Prozessüberwachung bezieht sich auf die Datenerfassung entlang der gesamten Produktionskette der Fülllinie. Sie besteht auch in der Überwachung des Energieverbrauchs und des Verbrauchs von zu verarbeitenden Lebensmitteln, der Maschinenauslastung sowie der Verfügbarkeit der zu verarbeitenden Lebensmittel.

Weiter bevorzugt sind die Maschinensteuerungen im Master-Steuerungsmodus jeweils dazu eingerichtet, Diagnosedaten und/oder Fehlermeldungen der Maschinensteuerung im Slave-Steuerungsmodus durch die Zustandsüberwachung und/oder die Prozessüberwachung zu empfangen und zu verarbeiten. Durch die vollumfängliche Überwachung der im Slave-Steuerungsmodus betriebenen Maschine ist die Zugänglichkeit der Maschinensteuerung im Slave-Steuerungsmodus auch im Falle von Betriebsstörungen nicht notwendig. Sämtliche diagnoserelevante Daten werden von der Maschinensteuerung im Slave-Steuerungsmodus an die Maschinensteuerung im Master-Steuerungsmodus über die Datenschnittstelle übermittelt. Somit erhält ein Benutzer durch die Maschinensteuerung im Master-Steuerungsmodus einen vollumfänglichen Remote-Zugriff auf die im Slave-Steuerungsmodus betriebene Maschine. Durch ein entsprechendes Verarbeiten der empfangenen Diagnosedaten und/oder Fehlermeldungen ist es der Maschinensteuerung im Master-Steuerungsmodus dabei insbesondere möglich, die im Slave-Steuerungsmodus betriebene Füllmaschine bei Bedarf abzuschalten oder aber rezeptrelevante Prozessparameter, Maschinenkonfiguration oder Betriebsmodi entsprechend zu verändern bzw. zu überschreiben. Ferner ist es der Maschinensteuerung im Master-Steuerungsmodus so möglich, den Betrieb der gesamten Fülllinie oder der Füllmaschinen für sich genommen kurzzeitig zu unterbrechen, beispielsweise um Kunst- oder Naturdarm aufzufüllen. Bei solchen Diagnosedaten handelt es sich um zeitkritische Signale, sodass der Betrieb durch die schnelle Datenkommunikation verbessert wird.

Besonders bevorzugt ist die Datenschnittstelle dabei zur Echtzeit-Datenübertragung zwischen der ersten Maschinensteuerung und der zweiten Maschinensteuerung eingerichtet. Insbesondere umfasst die Datenschnittstelle dabei einen CAN-Bus und eine Busleitung und/oder einen Ethercat, eine Ethernet-Leitung und/oder eine Ethernetverbindung, insbesondere Ethernet-IP, und einen potentialfreien Kontakt, einen Modbus, einen Profibus, RS-232, EIB/KNX und DMX. Unter einer Echtzeit-Datenübertragung wird der Definition der inzwischen durch die englischsprachige DIN ISO/IEC2382 abgelösten Norm DIN 44300 folgend der Betrieb eines Rechensystems verstanden, bei den Programme zur Verarbeitung anfallender Datenstände betriebsbereit sind, derart, dass die Verarbeitungsergebnisse innerhalb einer vorgegebenen Zeitspanne verfügbar sind. Die Daten können abhängig vom Anwendungsfall nach einer zufälligen Verteilung oder zu vorherbestimmten Zeitpunkten anfallen. Innerhalb einer Fülllinie ermöglicht eine Echtzeit-Datenübertragung erfindungsgemäß einer Reaktionszeit der im Master-Steuerungsmodus betriebenen Maschinensteuerung in Bezug auf Zustände der im Slave-Steuerungsmodus betriebenen Füllmaschine von wenigen Millisekunden bis Sekunden. Durch die Echtzeit-Datenübertragung ist es damit möglich, im laufenden Betrieb auf einen Zustand der Maschine im Slave-Steuerungsmodus zu reagieren, beispielsweise durch Anpassen bzw. Überschreiben von insbesondere rezeptrelevanten Prozessparametern. Diese Reaktionszeit wird dabei durch die verzögerungs- und verzugsarme Übertragungsgeschwindigkeit der Datenschnittstelle bestimmt.

Gemäß einer bevorzugten Ausführungsform ist die Steuerinformation eine erste Steuerinformation, die einen Soll-Betrieb im Master-Steuerungsmodus anzeigt, wobei eine zweite Steuerinformation einen Soll-Betrieb im Slave-Steuerungsmodus anzeigt. Somit wird der ersten Maschinensteuerung und der zweiten Maschinensteuerung durch Bereitstellung einer ersten Steuerinformation und einer zweiten Steuerinformation der jeweilige Soll-Betrieb angezeigt. Die erste Steuerinformation wird dabei bevorzugt der ersten Maschinensteuerung bereitgestellt und die zweite Steuerinformation wird bevorzugt der zweiten Maschinensteuerung bereitgestellt. Es wird also jeder der zwei Maschinensteuerungen eine eigene Steuerinformation bereitgestellt und die Maschinensteuerungen sind dazu eingerichtet, bei Empfang eben dieser Steuerinformation in einen dem Soll-Betrieb entsprechenden Steuerungsmodus zu schalten.

Gemäß einer bevorzugten Ausführungsform weist die Datenschnittstelle mindestens einen ersten Steckplatz und einen zweiten Steckplatz auf, wobei die Steuerinformation dem ersten Steckplatz zugeordnet ist. Die Datenschnittstelle umfasst bevorzugt einen CAN-Bus, welcher die Steckplätze aufweist bzw. mit den Steckplätzen kooperiert. Vorzugsweise ist die erste Steuerinformation dem ersten Steckplatz zugeordnet und die zweite Steuerinformation dem zweiten Steckplatz zugeordnet. Somit kann durch entsprechende Wahl des jeweiligen Steckplatzes bestimmt werden, welche der Maschinensteuerungen im Master-Steuerungsmodus und welche im Slave-Steuerungsmodus betrieben werden soll. Diese Zuteilung kann flexibel und bedarfsgerecht in Bezug auf die vorhandenen Stellmöglichkeiten in der Produktionsumgebung festgelegt werden.

Gemäß einer bevorzugten Weiterentwicklung weist die Datenschnittstelle ein Speichermedium zum Speichern der Zuordnung der Steuerinformation zu dem ersten Steckplatz auf und ist zur Bereitstellung und Übertragung der Steuerinformation an die mit dem ersten Steckplatz verbundene Maschinensteuerung eingerichtet. Sofern dem ersten Steckplatz die erste Steuerinformation zugeordnet ist und dem zweiten Steckplatz die zweite Steuerinformation zugeordnet ist, ist das Speichermedium zum Speichern der Zuordnung der ersten Steuerinformation zu dem ersten Steckplatz und der zweiten Steuerinformation zu dem zweiten Steckplatz eingerichtet. Die Datenschnittstelle ist ferner zur Bereitstellung und Übertragung der ersten Steuerinformation an die mit dem ersten Steckplatz verbundene Maschinensteuerung und zur Übertragung der zweiten Steuerinformation an die mit dem zweiten Steckplatz verbundene Maschinensteuerung eingerichtet. Somit wird über eine Funktionsintegration in Bezug auf die Datenschnittstelle einerseits eine steuerungstechnische Verbindung der ersten Maschinensteuerung und der zweiten Maschinensteuerung gewährleistet und gleichzeitig eine Zuordnung des Soll-Betriebs im Master-Steuerungsmodus und im Slave-Steuerungsmodus der beiden Maschinensteuerungen durch die Datenschnittstelle bewirkt.

Vorzugsweise ist der ersten Maschinensteuerung und/oder der zweiten Maschinensteuerung ferner eine zweite Steuerinformation zugeordnet, welche die Eignung der jeweiligen Maschinensteuerung zum Betrieb im Slave-Steuerungsmodus anzeigt. Die erste Maschinensteuerung und/oder die zweite Maschinensteuerung sind dabei nach Empfang der ersten Steuerinformation dazu eingerichtet, im Master-Steuerungsmodus betrieben zu werden und über Lese- und Schreibrechte zu verfügen, für den Fall, dass der zweiten über die Datenschnittstelle verbundenen Maschinensteuerung eine solche zweite Steuerinformation zugeordnet ist. Eine solche zweite Steuerinformation kann beispielsweise in einer Betriebssoftware der jeweiligen Maschinensteuerung hinterlegt sein oder durch manuelle Eingabe, beispielsweise mittels einer Tastatur, bereitgestellt werden.

Die Bereitstellung einer Steuerinformation durch die Datenschnittstelle kann im Falle einer CAN-Bus-Verbindung beispielsweise durch einen oder mehreren Master-Knoten eines sogenannten Multimaster-Busses erfolgen. Bei einem Multimaster-Bus ist eine zentrale oder dezentrale Kommunikation notwendig, die gewährleistet, dass zu jedem Zeitpunkt nur ein Master die Bus-Herrschaft besitzt. Ein solcher Master-Knoten, auch als aktiver Knoten oder Master-Node bezeichnet, ist dazu eingerichtet, selbstständig einen Kommunikationsablauf auf dem Bus zu initiieren. Über einen solchen Kommunikationsablauf können beispielsweise die den jeweiligen Steckplätzen zugeordneten Steuerinformationen bereitgestellt werden.

Gemäß einer weiteren bevorzugten Weiterentwicklung weisen die erste Maschinensteuerung und die zweite Maschinensteuerung jeweils eine Scanfunktion auf und sind dazu eingerichtet, bei Verbindung mit der Datenschnittstelle die dem Steckplatz bzw. der jeweils über die Datenschnittstelle verbundenen weiteren Maschinensteuerung zugeordnete Steuerinformation abzufragen. Eine solche Zuordnung der Steuerinformation zu den Steckplätzen kann beispielsweise durch eine Steckplatzkennung über die jeweilige Datenschnittstelle erfolgen. In Ausführungsbeispielen, in welchen die erste Maschinensteuerung und die zweite Maschinensteuerung jeweils eine Scanfunktion aufweisen, können diese im Falle einer CAN-Bus-Verbindung mit passiven Knoten bzw. Nodes der Datenschnittstelle, auch Slave-Knoten genannt, kommunizieren. Diese sind dazu eingerichtet, beispielsweise auf Anfragen über eine solche Scanfunktion zu antworten. Die entsprechende Antwort kann dabei beispielsweise eine Steuerinformation, welche einem Steckplatz bzw. einer Maschinensteuerung zugeordnet ist, umfassen. Der für den Betrieb im Slave-Steuerungsmodus vorgesehenen Maschinensteuerung wird insbesondere eine Node-Adresse bzw. Node-ID zugeordnet. Diese Zuordnung erfolgt beispielsweise abhängig von dem jeweiligen Steckplatz. Über die Scanfunktion fragt die Maschinensteuerung im Master-Steuerungsmodus dann nach neuen Node-IDs bzw. einer spezifischen, den Soll-Betrieb im Slave- Steuerungsmodus anzeigenden, Node-ID.

Gemäß einer weiteren bevorzugten Weiterentwicklung umfasst die Fülllinie weiter ein Computerprogramm und einen Prozessor zum Ausführen des Computerprogramms, welcher mit der ersten Maschinensteuerung und/oder der zweiten Maschinensteuerung verbunden ist. Der Prozessor ist dazu eingerichtet, bei Ausführung des Computerprogramms mindestens die erste Steuerinformation an der ersten Maschinensteuerung und/oder der zweiten Maschinensteuerung bereitzustellen. In diesem Fall handelt es sich bei der Steuerinformation insbesondere um ein Steuersignal. Ein solcher Prozessor kann insbesondere auch in die erste Maschinensteuerung und/oder die zweite Maschinensteuerung integriert sein. Somit kann bei einer Fülllinie, welche einen Prozessor aufweist, durch ein entsprechendes Computerprogramm und Ausführen dieses Computerprogramms eine Steuerinformation an der ersten Maschinensteuerung und/oder zweiten Maschinensteuerung bereitgestellt werden. Diese Steuerinformation zeigt dann einen Soll-Betrieb der Maschinensteuerungen an, wobei die Maschinensteuerungen dazu eingerichtet sind, bei Empfang diese Steuerinformation reziprok entweder im Master-Steuerungsmodus oder im Slave-Steuerungsmodus betrieben zu werden.

Vorzugsweise sind die erste Maschinensteuerung und die zweite Maschinensteuerung ferner dazu eingerichtet, jeweils über eine bzw. die Scanfunktion eine Steckplatzbelegung über die Datenschnittstelle abzufragen und für den Fall, dass der erste Steckplatz und der zweite Steckplatz belegt sind, abhängig von der Steuerinformation in den Master-Steuerungsmodus in den Slave-Steuerungsmodus zu schalten. Somit schalten die beiden Maschinensteuerungen in vorteilhafterweise ausschließlich in dem Fall in den Master-Steuerungsmodus bzw. den Slave-Steuerungsmodus, dass auch für jeden der Soll-Steuerungsmodi eine entsprechende Maschinensteuerung mit der Datenschnittstelle verbunden ist. Folglich ist bei einer abweichenden Steckplatzbelegung - etwa einer Belegung des ersten und des vierten Steckplatzes - auch weiterhin die Verbindung über die Datenschnittstelle zum herkömmlichen Betrieb über die jeweils eigene Maschinensteuerung der ersten Füllmaschine und der zweiten Füllmaschine möglich.

Gemäß einer bevorzugten Ausführungsform weist die erste Füllmaschine ein erstes Bedienfeld auf und die zweite Füllmaschine weist ein zweites Bedienfeld auf. Somit sind die erste Maschinensteuerung und die zweite Maschinensteuerung über das Bedienfeld bei einem individuellen Betrieb unabhängig voneinander bedienbar. Vorzugsweise sind die Maschinensteuerungen jeweils dazu eingerichtet, das Bedienfeld der im Slave-Steuerungsmodus betriebenen Maschinensteuerung zu sperren. So wird die im Slave-Steuerungsmodus betriebene Maschinensteuerung vor unberechtigten Zugriffen geschützt.

Vorzugsweise ist das erste Bedienfeld dazu eingerichtet, durch manuelle Eingabe eine Steuerinformation, insbesondere die erste Steuerinformation, an der ersten Maschinensteuerung bereitzustellen. Weiter bevorzugt ist das zweite Bedienfeld dazu eingerichtet, durch manuelle Eingabe eine Steuerinformation, insbesondere die erste Steuerinformation, an der zweiten Maschinensteuerung bereitzustellen. Somit ist in vorteilhafter Weise vorgesehen, dass sowohl über das erste Bedienfeld als auch über das zweite Bedienfeld die Bereitstellung der jeweiligen Steuerinformation erfolgen kann. Hierbei handelt es sich bei der Steuerinformation insbesondere um einen manuellen Steuerungsbefehl. Vorzugsweise kann auch die zweite Steuerinformation durch manuelle Eingabe über das jeweilige Bedienfeld bereitgestellt werden.

Vorzugsweise sind die erste Maschinensteuerung und die zweite Maschinensteuerung ferner dazu eingerichtet, im Master-Steuerungsmodus die zweite Steuerinformation bereitzustellen. Die zweite Steuerinformation ist hier insbesondere ein Steuersignal. Somit ist es ausreichend, lediglich die erste Steuerinformation an der ersten Maschinensteuerung bzw. der zweiten Maschinensteuerung bereitzustellen, welche dazu eingerichtet ist, in Reaktion auf diese erste Steuerinformation an der reziprok im Slave-Steuerungsmodus zu betreibenden Maschinensteuerung die zweite Steuerinformation bereitzustellen. Es soll dabei verstanden werden, dass die jeweilige Maschinensteuerung selbst noch nicht aktiv im Master-Steuerungsmodus betrieben werden muss, allerdings die entsprechende Steuerinformation empfangen hat und somit die Information über den Soll-Steuerungsmodus im Master-Steuerungsmodus informiert ist. In einigen Ausführungsformen sind die erste Maschinensteuerung und die zweite Maschinensteuerung dann dazu eingerichtet, zunächst eine zweite Steckplatzbelegung bzw. grundsätzlich eine Zuordnung der zweiten Steuerinformation, die einen Soll-Betrieb im Slave-Steuerungsmodus anzeigt, über eine Scanfunktion abzufragen und im Master-Steuerungsmodus betrieben zu werden. Sofern lediglich eine zweite Steckplatzbelegung abgefragt wird, sind die erste Maschinensteuerung und die zweite Maschinensteuerung anschließend dazu eingerichtet, die zweite Steuerinformation abzufragen.

Gemäß einer bevorzugten Ausführungsform ist die Fülllinie zur Herstellung von gefüllten Lebensmittelprodukten in einem Koextrusionsprozess eingerichtet. Insbesondere durch einen Betrieb von Fülllinien mit zwei Füllmaschinen in einem Koextrusionsprozess ist die Abstimmung zwischen den Füllmaschinen in Bezug auf rezeptrelevante Prozessparameter von besonderer Bedeutung. Beispielsweise stellt dabei die erste Füllmaschine das Füllmaterial für die Hülle bereit und die zweite Füllmaschine stellt das Füllmaterial für den Kern bereit. Eine Veränderung der Prozessparameter der ersten Füllmaschine begründet gleichzeitig einen Bedarf zur Änderung der rezeptrelevanten Prozessparameter der zweiten Füllmaschine. Ändert sich das Portionsgewicht des Füllmaterials für den Kern, so muss gleichzeitig auch das Portionsgewicht des Füllmaterials für die Hülle angepasst werden. Diese stets eng aufeinander abgestimmte Anpassung bzw. Überschreibung der rezeptrelevanten Prozessparameter macht in besonderer Weise einen vollständigen Zugriff in Bezug auf sämtliche der rezeptrelevanten Prozessparameter der im Slave-Steuerungsmodus betriebenen Maschinensteuerung notwendig.

Gemäß einer bevorzugten Weiterentwicklung umfasst die Fülllinie dabei ferner ein Vorsatzgerät mit einer dritten Maschinensteuerung, welche über die Datenschnittstelle steuerungstechnisch mit der ersten Maschinensteuerung und der zweiten Maschinensteuerung verbunden ist. Im Falle von beispielsweise als Vorsatzgerät betriebenen Portioniervorrichtungen umfassen rezeptrelevante Prozessparameter ferner das Portionsvolumen, die Portionsform und das Portioniergeschwindigkeit. Im Falle von Clipper-Maschinen als Vorsatzgeräte umfassen rezeptrelevante Prozessparameter ferner die Clipzeit oder auch die Cliplage. Bei einem gemeinsamen Betreib einer der Füllmaschinen mit einer Abschneidevorrichtung umfassen rezeptrelevante Prozessparameter ferner Messergeschwindigkeit.

Die dritte Maschinensteuerung ist bevorzugt dazu eingerichtet, bei steuerungstechnischer Verbindung über die Datenschnittstelle im Slave-Steuerungsmodus betrieben, wobei der Betrieb abhängig von der bereitgestellten Steuerinformation erfolgt. Dabei werden immer zwei der drei Maschinensteuerungen im Slave-Steuerungsmodus betrieben. Somit kann auch der Betrieb des Vorsatzgerätes in enger Abstimmung mit dem Betrieb der ersten Füllmaschine und der zweiten Füllmaschine erfolgen durch die Übertragung von Lese- und Schreibrechten. Beispielsweise über die erste Maschinensteuerung können dann sämtliche rezeptrelevante Prozessparameter des Vorsatzgeräts, der ersten Füllmaschine und der zweiten Füllmaschine ausgelesen und überschrieben werden. Auch Diagnoseprozesse können in Bezug auf die erste Füllmaschine, die zweite Füllmaschine sowie das Vorsatzgerät mittels der ersten Maschinensteuerung ausgeführt werden. Die Steuerbarkeit und der Betrieb der Fülllinie insgesamt werden somit weiter verbessert.

Das Vorsatzgerät kann gemäß einer weiteren bevorzugten Ausführungsform auch zum Betrieb unabhängig von der ersten Füllmaschine und der zweiten Füllmaschine eingerichtet sein. Eine derart enge Abstimmung, wie es beispielsweise bei zwei Füllmaschinen im Koextrusionsprozess der Fall ist, ist für ein Vorsatzgerät nicht zwingend notwendig. Auch sind Vorsatzgeräte zur Weitergabe bzw. Abgabe der durch die Fülllinie hergestellten Nahrungsmittel zumeist besser zugänglich angeordnet, sodass ein Remote-Zugriff auf die Maschinensteuerung nicht notwendig ist.

Gemäß einer weiteren bevorzugten Weiterentwicklung weisen die erste Füllmaschine und die zweite Füllmaschine jeweils eine mit der Maschinensteuerung und dem Bedienfeld kooperierende Anzeigeeinheit auf. Die Anzeigeeinheit ist bevorzugt im Master-Steuerungsmodus dazu eingerichtet, die implementierten Lese- und Schreibrechte sowie die Lese- und Schreibrechte der Maschinensteuerung im Master-Steuerungsmodus anzuzeigen. Die Bedienbarkeit der Fülllinie wird damit weiter vereinfacht.

Vorzugsweise sind die erste Maschinensteuerung und die zweite Maschinensteuerung, insbesondere auch die dritte Maschinensteuerung im Master-Steuerungsmodus dazu eingerichtet, bei Überschreiben bzw. Verändern eines ersten rezeptrelevanten Prozessparameters, sämtliche der mit dem ersten rezeptrelevanten Prozessparameter assoziierten rezeptrelevanten Prozessparameter zu identifizieren und korrespondieren zu dem ersten rezeptrelevanten Prozessparameter anzupassen. Die mit dem ersten rezeptrelevanten Prozessparameter assoziierten rezeptrelevanten Prozessparameter können dabei der ersten Füllmaschine und der zweiten Füllmaschine sowie gegebenenfalls weiteren Vorsatzgeräten zugeordnet sein. Somit wird die Abstimmung der Herstellung von Nahrungsmitteln durch die Füllmaschine insgesamt optimiert. Wird beispielsweise das Portionsgewicht des Füllmaterials für den Kern reduziert, so wird in gleicher Weise auch das Portionsgewicht des Füllmaterials für die Hülle reduziert. Auch die Geschwindigkeit beispielsweise eines Vorsatzgerätes, welches die portionierten Lebensmittel aufnimmt und abtransportiert, kann entsprechend der veränderten Portionsgröße angepasst werden.

Die Erfindung wurde vorstehend in einem ersten Aspekt in Bezug auf eine Fülllinie beschrieben. Die Erfindung löst die eingangs genannte Aufgabe in einem zweiten Aspekt durch ein Verfahren zum Betreiben einer Fülllinie, insbesondere einer Fülllinie nach dem ersten Aspekt der Erfindung. Das Verfahren zum Betrieb einer Fülllinie umfasst die Schritte:
a) steuerungstechnisches Verbinden einer ersten Maschinensteuerung einer ersten Füllmaschine mit einer Datenschnittstelle,
b) steuerungstechnisches Verbinden einer zweiten Maschinensteuerung einer zweiten Füllmaschinemit der Datenschnittstelle,
c) Bereitstellen einer Steuerinformation an der ersten Maschinensteuerung und/oder der zweiten Maschinensteuerung,
d) Initialisieren eines ersten Soll-Steuerungsmodus in der der ersten Maschinensteuerung und eines zweiten Soll-Steuerungsmodus in der zweiten Maschinensteuerung abhängig von der bereitgestellten Steuerinformation, wobei die zwei Soll-Steuerungsmodi einen Master-Steuerungsmodus und einen Slave-Steuerungsmodus umfassen,
   wobei die Initialisierung des Slave-Steuerungsmodus die Übertragung von Lese- und Schreibrechten, insbesondere vollumfänglichen Lese- und Schreibrechten bezüglich rezeptrelevanter Prozessparameter an die im Master-Steuerungsmodus betriebene Maschinensteuerung, und die Initialisierung des Master-Steuerungsmodus die Implementierung der übertragenen Lese- und Schreibrechte in die im Master-Steuerungsmodus betriebene Maschinensteuerung umfasst,
e) Reziprokes Betreiben der ersten Maschinensteuerung und der zweiten Maschinensteuerung entweder in einem Master-Steuerungsmodus oder in einem Slave-Steuerungsmodus, umfassend das Auslesen und Überschreiben der rezeptrelevanten Prozessparameter der Ersten Füllmaschine und der zweiten Füllmaschine von der Maschinensteuerung im Master-Steuerungsmodus.

Durch das Initialisieren eines ersten Soll-Steuerungsmodus und eines zweiten Soll-Steuerungsmodus abhängig von der bereitgestellten Steuerinformation und dem daraus folgenden reziproken Betreiben- entweder in einem Master-Steuerungsmodus oder in einem Slave-Steuerungsmodus - der Maschinensteuerungen, macht sich das Verfahren die eingangs in Bezug auf die Fülllinie beschriebenen Vorteile zu eigen. In Bezug auf den ersten Aspekt beschriebene Vorteile und bevorzugte Ausführungsformen sind ebenso Vorteile und bevorzugte Ausführungsformen in Bezug auf den zweiten Aspekt und vice versa.

Gemäß einer bevorzugten Ausführungsform des Verfahrens umfassen die Leserechte eine Zustandsüberwachung der im Slave-Steuerungsmodus beschriebenen ersten Füllmaschine bzw. zweiten Füllmaschine und/oder die Prozessüberwachung der gesamten Fülllinie. Das Betreiben der ersten Maschinensteuerung bzw. der zweiten Maschinensteuerung im Master-Steuerungsmodus umfasst dabei ferner die Schritte:
f) Empfangen und Verarbeiten von Diagnosedaten und/oder Fehlermeldungen der Maschinensteuerung im Slave-Steuerungsmodus durch die Zustandsüberwachung und/oder die Prozessüberwachung,
g1) Abschalten der ersten bzw. zweiten Füllmaschine im Slave-Steuerungsmodus, oder g2) Anhalten der ersten bzw. zweiten Füllmaschine im Master-Steuerungsmodus und/oder im Slave-Steuerungsmodus,
g3) Anpassen von Rezept- und Produktparameter in den Produkt- und Rezepteinstellungen durch Nutzung der Lese- und Schreibrechte, und/oder
g) Anpassen von Prozessparameter in den Prozesseinstellungen durch Nutzung der Lese- und Schreibrechte. Somit können Beschädigungen der Nahrungsmittel bzw. der Füllmaschine durch ein Abschalten bzw. Anhalten beim Empfang und nach der Verarbeitung von entsprechenden Diagnosedaten und/oder Fehlermeldungen. Ferner ist durch das Empfangen und Verarbeiten von Diagnosedaten und/oder Fehlermeldungen durch die Zustandsüberwachung bzw. Prozessüberwachen auch das Anpassen von rezeptrelevanten Prozessparametern, welche insbesondere in einem Speicher als Rezepteinstellungen hinterlegt sind, möglich. Die Maschinensteuerung im Master-Steuerungsmodus verfügt somit über ein Vollzugriff auch in Bezug auf die Zustandsüberwachung oder Prozessüberwachung und damit tiefgreifende Diagnosedaten und Diagnosefunktion.

Gemäß einer weiteren bevorzugten Ausführungsform umfasst die Datenschnittstelle mindestens einen ersten Steckplatz und einen zweiten Steckplatz, wobei die Steuerinformation den ersten Steckplatz zugeordnet ist. Das Bereitstellen der Steuerinformation gemäß Schritt c) umfasst dabei ferner die Übertragung der Steuerinformation bei Verbindung mit dem ersten Steckplatz durch die Datenschnittstelle oder das Abfragen der dem ersten Steckplatz zugeordneten Steuerinformation durch eine Scanfunktion der ersten Maschinensteuerung und der zweiten Maschinensteuerung. Somit kann die Zuordnung des Soll-Betriebsmodus der Füllmaschinen in einfacher Weise abhängig von der Steckplatzbelegung der Datenschnittstelle erfolgen. Durch die Übertragung mittels der Datenschnittstelle kann dies in einfacher Weise über einen sogenannten Master-Knoten einer CAN-Bus-Verbindung erfolgen. Alternativ kann die Übermittlung der Steuerinformation durch Abfragen der dem ersten Steckplatz zugeordneten Steuerinformation durch eine Scanfunktion erfolgen. Diese fragt beispielsweise im Falle einer CAN-Bus-Verbindung einen passiven Knoten nach einem entsprechenden Signal ab.

Gemäß einer alternativen bevorzugten Ausführungsform umfasst das Bereitstellen der Steuerinformation gemäß Schritt c) das Bereitstellen der Steuerinformation an der ersten Maschinensteuerung und/oder der zweiten Maschinensteuerung durch eine manuelle Eingabe über ein Bedienfeld. Somit kann eine entsprechende Steuerinformation bei Bedarf von einem Bediener direkt über eine Benutzerschnittstelle bereitgestellt werden.

Vorzugsweise ist die Steuerinformation eine erste Steuerinformation, die einem Soll-Betrieb im Master-Steuerungsmodus anzeigt, wobei das Bereitstellen der Steuerinformation gemäß Schritt c) ferner das Bereitstellen einer zweiten Steuerinformation umfasst, die einen Soll-Betrieb im Slave-Steuerungsmodus anzeigt. Die Bereitstellung erfolgt dabei bevorzugt durch die im Master-Steuerungsmodus betriebene bzw. zu betreibende Maschinensteuerung. Somit werden der ersten Maschinensteuerung und der zweiten Maschinensteuerung durch Bereitstellung einer ersten Steuerinformation und einer zweiten Steuerinformation ihr jeweiliger Soll-Betrieb angezeigt. Die erste Steuerinformation wird dabei bevorzugt der ersten Maschinensteuerung bereitgestellt und die zweite Steuerinformation wird bevorzugt der zweiten Maschinensteuerung bereitgestellt. Es wird also jeder der zwei Maschinensteuerungen eine eigene Steuerinformation bereitgestellt und die Maschinensteuerungen sind dazu eingerichtet, bei Empfang eben dieser Steuerinformation in einen dem Soll-Betrieb entsprechenden Steuerungsmodus zu schalten.

Gemäß einer bevorzugten Ausführungsform umfassen die Lese- und Schreibrechte ferner Maschinenkonfigurationen und/oder Betriebsmodi, wobei der Betrieb der ersten Maschinensteuerung bzw. der zweiten Maschinensteuerung im Master-Steuerungsmodus gemäß Schritt e) ferner das Auslesen und Überschreiben der Maschinenkonfiguration und/oder Betriebsmodi durch die im Master-Steuerungsmodus betriebene Maschinensteuerung umfasst. Durch die Lese- und Schreibrechte der im Master-Steuerungsmodus betriebenen Maschinensteuerung wird die Steuerung der Fülllinie weiter optimiert. Die Steuerung der Fülllinie kann nunmehr auch hinsichtlich der Maschinenkonfiguration und Betriebsmodi einzig durch die im Master-Steuerungsmodus betriebene Maschinensteuerung vollständig eingestellt und bei Bedarf überschrieben werden.

Die Erfindung wird im Folgenden unter Bezugnahme auf die beigefügten Figuren anhand bevorzugter Ausführungsbeispiele erläutert. Hierbei zeigen:
- Fig. 1:: eine Fülllinie gemäß einer ersten Ausführungsform in einer perspektivischen Ansicht;
- Fig. 2a:: eine Prinzip-Skizze einer ersten Ausführungsform einer Datenleitung für die Fülllinie gemäß Fig. 1;
- Fig. 2b:: eine Prinzip-Skizze einer zweiten Ausführungsform einer Datenleitung für die Fülllinie gemäß Fig. 1;
- Fig. 3:: eine Fülllinie gemäß einer zweiten Ausführungsform in einer perspektivischen Ansicht;
- Fig. 4a:: eine Prinzip-Skizze einer ersten Ausführungsform einer Datenleitung für die Fülllinie gemäß Fig. 3;
- Fig. 4b:: eine Prinzip-Skizze einer zweiten Ausführungsform einer Datenleitung für die Fülllinie gemäß Fig. 3;
- Fig. 5:: ein Verfahren zum Betrieb einer Fülllinie gemäß Fig. 1 gemäß einer ersten Ausführungsform;
- Fig. 6:: ein Verfahren zum Betrieb einer Fülllinie gemäß Fig. 1 in einer zweiten Ausführungsform; und
- Fig. 7:: ein Verfahren zum Betrieb einer Fülllinie gemäß Fig. 3 gemäß einer bevorzugten Ausführungsform.

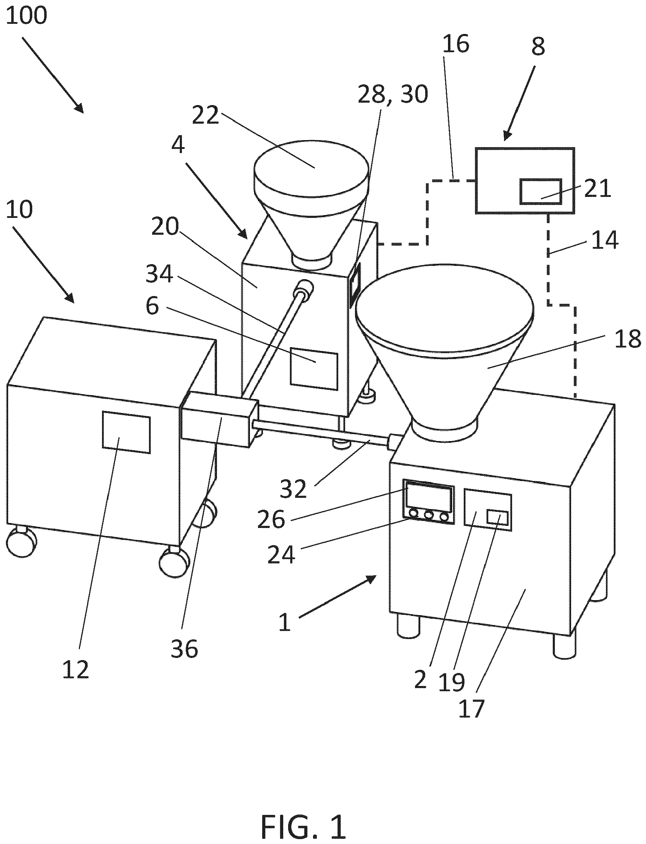

Die Fülllinie 100 gemäß Fig. 1 umfasst eine erste Füllmaschine 1 mit einer ersten Maschinensteuerung 2 und eine zweite Füllmaschine 4. Die zweite Füllmaschine 4 umfasst eine zweite Maschinensteuerung 6. Die erste Füllmaschine 1 und die zweite Füllmaschine 4 sind sowohl in Kooperation miteinander als auch unabhängig voneinander betreibbar.

Die Fülllinie 100 weist weiterhin eine Datenschnittstelle 8 auf, mittels welcher die erste Füllmaschine 1 und die zweite Füllmaschine 4 steuerungstechnisch miteinander verbunden sind.

Ferner umfasst die Fülllinie 100 bevorzugt eine weitere Nahrungsmittelmaschine in Form eines Vorsatzgeräts 10. Das Vorsatzgerät 10 ist beispielsweise eine Trenneinrichtung. Bevorzugt weist das Vorsatzgerät 10 eine eigene dritte Maschinensteuerung 12 auf und ist somit sowohl in Kooperation mit der ersten Füllmaschine 1 und der zweiten Füllmaschine 4 als auch unabhängig von diesen betreibbar.

Die erste Füllmaschine 1 ist über eine erste Datenleitung 14 mit der Datenschnittstelle 8 verbunden. Die zweite Füllmaschine 4 ist über eine zweite Datenleitung 16 mit der Datenschnittstelle 8 verbunden. Bei den Datenleitungen 14, 16 handelt es sich insbesondere um kabelgebundene Leitungen, welche eine Datenübertragung in jeglichen Produktionsumgebungen in zuverlässiger Weise ermöglichen. Die erste Datenleitung 14 und die zweite Datenleitung 16 sind dabei zur Datenleitung in Echtzeit eingerichtet, wobei es sich bei den Datenleitungen 14, 16 beispielsweise um Bus-Leitungen oder Ethernet-Leitungen handelt. Entsprechend ist die Datenschnittstelle 8 bevorzugt entweder als CAN-Bus oder als Ethercat ausgebildet.

Die erste Füllmaschine 1 umfasst ein Gehäuse 17 und einen bevorzugt an dem Gehäuse 17 schwenkbar montierten Trichter 18. Die erste Maschinensteuerung 2 weist eine Scanfunktion 19 und die Datenschnittstelle 8 weist ein Speichermedium 21 zum Speichern der Zuordnung der Steuerinformation S1 auf. Die Scanfunktion 19 ist zum Abfragen der im Speichermedium 21 gespeicherten Information eingerichtet.

Die zweite Füllmaschine 4 umfasst analog dazu ein Gehäuse 20 und einen bevorzugt schwenkbar an dem Gehäuse 20 montierten Trichter 22. Die zweite Maschinensteuerung 6 weist bevorzugt auch eine nicht gezeigte Scanfunktion auf.

Ferner umfasst die erste Füllmaschine 1 ein Bedienfeld 24 und eine dem Bedienfeld 24 zugeordnete Anzeigeeinheit 26. Das erste Bedienfeld 24 und die erste Anzeigeeinheit 26 sind steuerungstechnisch mit der ersten Maschinensteuerung 2 verbunden.

Die zweite Füllmaschine 4 umfasst ebenfalls ein Bedienfeld 28 und eine dem Bedienfeld 28 zugeordnete Anzeigeeinheit 30. Das zweite Bedienfeld 28 und die zweite Anzeigeeinheit 30 sind mit der zweiten Maschinensteuerung 6 steuerungstechnisch verbunden.

Die Fülllinie 100 ist insbesondere zur Herstellung von gefüllten Nahrungsmitteln aus einer pastösen Masse in einem Koextrusionsprozess eingerichtet. Es soll allerdings verstanden werden, dass die Erfindung nicht auf Fülllinien für den Koextrusionsprozess beschränkt ist.

Die erste Füllmaschine 1 weist ein erstes Füllrohr 32 auf und die zweite Füllmaschine 4 weist ein zweites Füllrohr 34 auf. Die erste Füllmaschine 1 übernimmt dabei die Portionierung des für die Hülle vorgesehenen Füllmaterials über das erste Füllrohr 32 und die zweite Füllmaschine 4 übernimmt die Portionierung des für den Kern vorgesehenen Füllmaterials. Bei dem Füllmaterial handelt es sich um eine pastöse Masse. Das Vorsatzgerät 10 weist ein Formmodul 36 auf, welches mit dem ersten Füllrohr 32 und dem zweiten Füllrohr 34 verbunden ist. Das Vorsatzgerät 10 ist mittels des Formmoduls 36 dazu eingerichtet, das Füllmaterial für den Kern und für die Hülle zusammenzuführen und beispielsweise einen kontinuierlichen Strang abzugeben. Vorliegend ist das Vorsatzgerät 10 bevorzugt als Trenneinrichtung ausgebildet und ferner dazu eingerichtet, anstatt eines kontinuierlichen Strangs Portionen des gefüllten Nahrungsmittels durch Trennen des kontinuierlichen Strangs bereitzustellen.

Wie in Fig. 1 ersichtlich, ist das Bedienfeld 24 der ersten Füllmaschine 1 einfach zugänglich und hingegen der Zugang zu dem Bedienfeld 28 der zweiten Füllmaschine 4 aufgrund des Verlaufs der Füllrohre 32, 34 und der Anordnung des Vorsatzgeräts 10 erschwert. Hier setzt die Erfindung an und ermöglicht einen Remote-Zugriff auf die zweite Maschinensteuerung 6 durch die erste Maschinensteuerung 2.

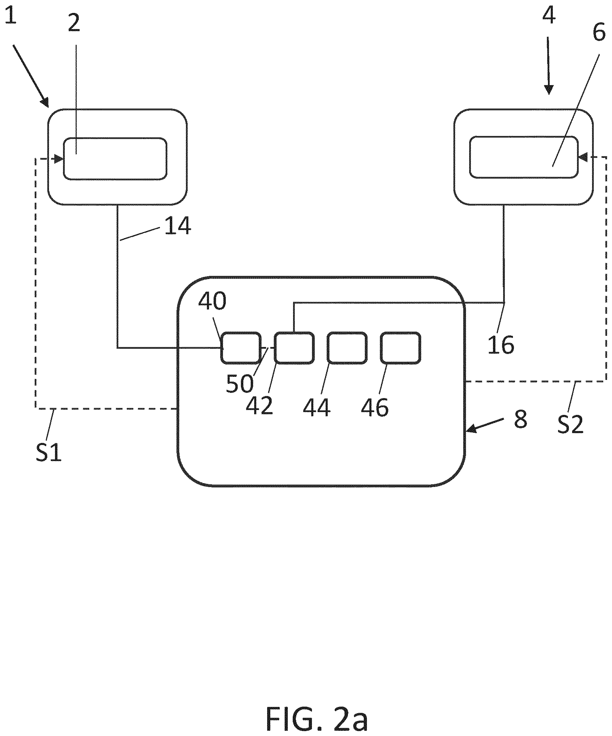

Wie in Fig. 2a gezeigt, ermöglicht die steuerungstechnische Verbindung über die Datenschnittstelle 8 der ersten Füllmaschine 1 und der zweiten Füllmaschine 4 den Betrieb der ersten Maschinensteuerung 2 und der zweiten Maschinensteuerung 6 in zwei voneinander verschiedenen Steuerungsmodi durch Bereitstellung mindestens einer Steuerinformation S1, S2. Die Soll-Steuerungsmodi umfassen einen Master-Steuerungsmodus und einen Slave-Steuerungsmodus. Der Betrieb im Slave-Steuerungsmodus bewirkt eine Übertragung von Lese- und Schreibrechten bezüglich rezeptrelevanter Prozessparameter an die im Master-Steuerungsmodus betriebene Maschinensteuerung. Die im Master-Steuerungsmodus betriebene Maschinensteuerung ist wiederum dazu eingerichtet, die übertragenen Lese- und Schreibrechte zu implementieren, sodass eine der beiden Maschinensteuerungen 1, 4 auf die rezeptrelevanten Prozessparameter beider Maschinensteuerungen 1, 4 Zugriff hat und über entsprechende Lese- und Schreibrechte verfügt. In Fig. 2a weist die Datenschnittstelle 8 insgesamt vier Steckplätze 40, 42, 44, 46 auf. Die erste Maschinensteuerung 2 ist mit dem ersten Steckplatz 40 verbunden. Die zweite Maschinensteuerung 6 ist mit dem zweiten Steckplatz 42 verbunden. Die Datenschnittstelle 8 ist vorliegend dazu eingerichtet, die erste Steuerinformation S1 bereitzustellen, welches einen Soll-Betrieb im Master-Steuerungsmodus anzeigt. Die erste Steuerinformation S1 ist dabei vorliegend dem ersten Steckplatz 40 zugeordnet, sodass die Datenschnittstelle 8 bei Verbindung der ersten Maschinensteuerung 2 mit dem ersten Steckplatz 40 die Steuerinformation S1 der ersten Maschinensteuerung 2 bereitstellt.

Ferner ist die Datenschnittstelle 8 dazu eingerichtet, eine zweite SteuerinformationS2 bereitzustellen, welches einen Soll-Betrieb im Slave-Steuerungsmodus anzeigt. Die zweite Steuerinformation S2 ist dem zweiten Steckplatz 42 zugeordnet, sodass die Datenschnittstelle 8 bei Verbindung der zweiten Maschinensteuerung 6 mit dem zweiten Steckplatz 42 dazu eingerichtet ist, die zweite Steuerinformation S2 der zweiten Maschinensteuerung 6 bereitzustellen. Die Bereitstellung der ersten Steuerinformation S1 erfolgt dabei über eine erste Datenleitung 14 und die Bereitstellung der zweiten Steuerinformation S2 erfolgt dabei über eine Datenleitung 16.

Mindestens der erste Steckplatz 40 und der zweite Steckplatz 42 sind steuerungstechnisch über eine erste Signalverbindung 50 miteinander verbunden. Über die erste Datenleitung 14, die zweite Datenleitung 16 sowie die erste Signalverbindung 50 werden dabei sowohl vor Produktionsstart als auch kontinuierlich im laufenden Produktionsbetrieb in Echtzeit rezeptrelevante Prozessparameter von der zweiten Maschinensteuerung 6 im Slave-Steuerungsmodus an die erste Maschinensteuerung 2 bereitgestellt.

Nach Empfang der ersten Steuerinformation S1, welches einen Soll-Betrieb im Master-Steuerungsmodus anzeigt, ist die erste Maschinensteuerung 2 bevorzugt dazu eingerichtet, mittels einer Scanfunktion 19 (vgl. Fig. 1) die Belegung weiterer Steckplätze 42, 44, 46 abzufragen.

In bevorzugten Ausführungsbeispielen ist die erste Maschinensteuerung 2 im Master-Steuerungsmodus auch zur Durchführung entweder einer Zustandsüberwachung der zweiten Füllmaschine 4 oder aber einer Prozessüberwachung der gesamten Fülllinie 100 (vgl. Fig. 1) eingerichtet. In diesem Zusammenhang ist die erste Maschinensteuerung 2 insbesondere auch dazu eingerichtet, Diagnosedaten und/oder Fehlermeldungen der zweiten Maschinensteuerung 6 zu empfangen und zu verarbeiten. Die erste Maschinensteuerung 2 ist dazu eingerichtet, abhängig von diesen verarbeiteten Diagnosedaten und/oder Fehlermeldungen die zweite Füllmaschine 4 anzuhalten bzw. auszuschalten oder bei Bedarf rezeptrelevante Prozessparameter anzupassen.

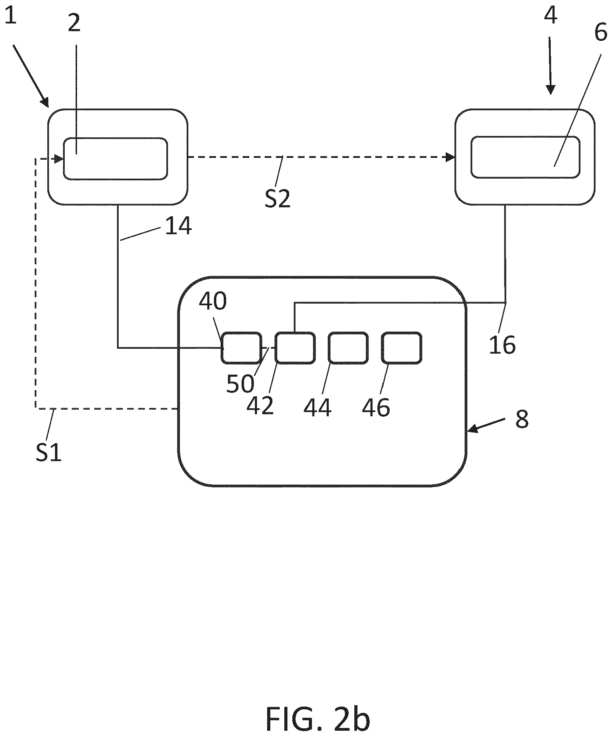

Fig. 2b zeigt eine Prinzip-Skizze betreffend die Datenübertragung der Fülllinie gemäß Fig. 1 gemäß einer zweiten Ausführungsform. Gleiche bzw. ähnliche Einheiten haben in den Figuren 2a und 2b identische Bezugszeichen. Es wird umfassend auf die Beschreibung des Ausführungsbeispiels gemäß Fig. 2a verwiesen und lediglich auf die Unterschiede der Ausführungsbeispiele im Folgenden detailliert eingegangen.

Die Ausführungsbeispiele gemäß den Figuren 2a und 2b unterscheiden sich durch die Art der Bereitstellung der zweiten Steuerinformation S2. Die erste Steuerinformation S1 wird in beiden Ausführungsbeispielen in bekannter Weise durch die Datenschnittstelle 8 der ersten Maschinensteuerung 2 bereitgestellt. Die erste Maschinensteuerung 2 gemäß Fig. 2b ist daraufhin dazu eingerichtet, der zweiten Maschinensteuerung 4 eine zweite Steuerinformation S2 bereitzustellen. Diese zweite Steuerinformation S2 zeigt vorliegend einen Soll-Betrieb im Slave-Steuerungsmodus an. Die Bereitstellung der zweiten Steuerinformation S2 durch die erste Maschinensteuerung 2 kann sowohl über die Datenleitungen 14, 16 und die Datenschnittstelle 8 erfolgen als auch kabellos über eine Bluetooth-Verbindung oder eine Funkverbindung zwischen der ersten Maschinensteuerung 2 und der zweiten Maschinensteuerung 6.

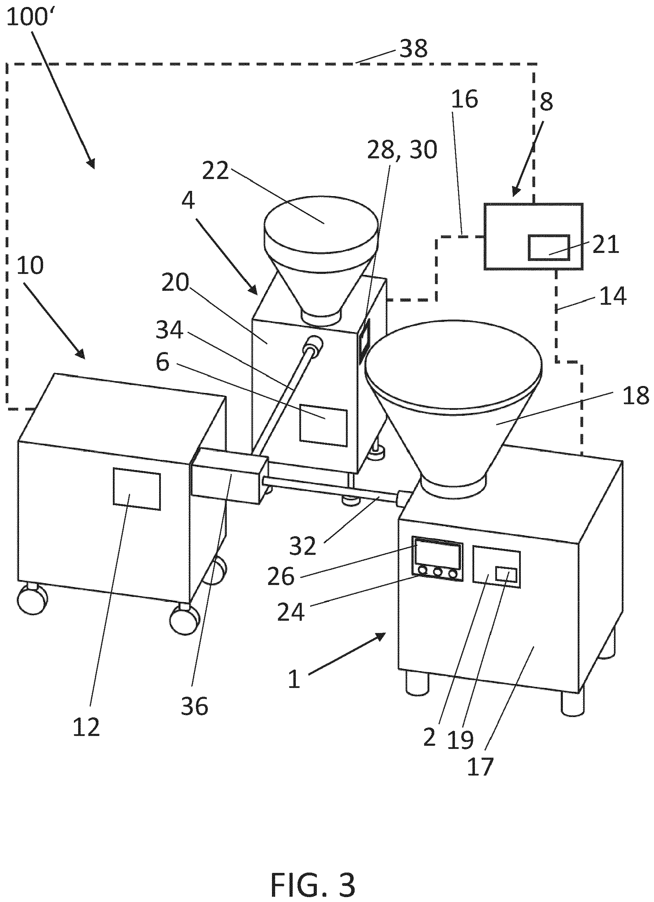

In Bezug auf die in Fig. 3 gezeigte Ausführungsform der Fülllinie 100', weisen gleiche und ähnliche Bauteile bzw. Einheiten in den Figuren 1 und 3 identische Bezugszeichen auf.

Die Fülllinie 100' umfasst in bekannter Weise eine erste Füllmaschine 1 mit einer ersten Maschinensteuerung 2 und eine zweite Füllmaschine 4. Die zweite Füllmaschine 4 umfasst eine zweite Maschinensteuerung 6. Die erste Füllmaschine 1 und die zweite Füllmaschine 4 sind sowohl in Kooperation miteinander als auch unabhängig voneinander betreibbar.

Die Fülllinie 100' weist weiterhin eine Datenschnittstelle 8 auf, mittels welcher die erste Füllmaschine 1 und die zweite Füllmaschine 4 steuerungstechnisch miteinander verbunden sind.

Ferner umfasst die Fülllinie 100' eine weitere Nahrungsmittelmaschine in Form eines Vorsatzgeräts 10. Das Vorsatzgerät 10 ist beispielsweise eine Trenneinrichtung. Bevorzugt weist das Vorsatzgerät 10 eine eigene dritte Maschinensteuerung 12 auf und ist somit sowohl in Kooperation mit der ersten Füllmaschine 1 und der zweiten Füllmaschine 4 als auch unabhängig von diesen betreibbar.

Die erste Füllmaschine 1 ist über eine erste Datenleitung 14 mit der Datenschnittstelle 8 verbunden. Die zweite Füllmaschine 4 ist über eine zweite Datenleitung 16 mit der Datenschnittstelle 8 verbunden. Bei den Datenleitungen 14, 16 handelt es sich insbesondere um kabelgebundene Leitungen, welche eine zuverlässige und robuste Datenübertragung ermöglichen. Die erste Datenleitung 14 und die zweite Datenleitung 16 sind dabei zur Datenleitung in Echtzeit eingerichtet, wobei es sich bei den Datenleitungen 14, 16 beispielsweise um Bus-Leitungen oder Ethernet-Leitungen handelt. Entsprechend ist die Datenschnittstelle 8 bevorzugt entweder als CAN-Bus oder als Ethercat ausgebildet.

Die erste Füllmaschine 1 umfasst in bekannter Weise ein Gehäuse 17 und einen bevorzugt an dem Gehäuse 17 schwenkbar montierten Trichter 18. Die erste Maschinensteuerung 2 weist eine Scanfunktion 19 und die Datenschnittstelle 8 weist ein Speichermedium 21 zum Speichern der Zuordnung der Steuerinformation S1 auf.

Die zweite Füllmaschine 4 umfasst analog dazu ein Gehäuse 20 und einen bevorzugt schwenkbar an dem Gehäuse 20 montierten Trichter 22. Die zweite Maschinensteuerung 6 weist bevorzugt auch eine nicht gezeigte eine Scanfunktion auf.

Ferner umfasst die erste Füllmaschine 1 ein Bedienfeld 24 und eine dem Bedienfeld 24 zugeordnete Anzeigeeinheit 26. Das Bedienfeld 24 und die Anzeigeeinheit 26 sind steuerungstechnisch mit der ersten Maschinensteuerung 2 verbunden.

Die zweite Füllmaschine 4 umfasst ebenfalls ein Bedienfeld 28 und eine dem Bedienfeld 28 zugeordnete Anzeigeeinheit 30. Das Bedienfeld 28 und die Anzeigeeinheit 30 sind mit der zweiten Maschinensteuerung 6 steuerungstechnisch verbunden.

Die Fülllinie 100' ist insbesondere zur Herstellung von gefüllten Nahrungsmitteln aus einer pastösen Masse in einem Koextrusionsprozess eingerichtet.

Die erste Füllmaschine 1 weist ein erstes Füllrohr 32 auf und die zweite Füllmaschine 4 weist ein zweites Füllrohr 34 auf. Das Vorsatzgerät 10 weist ein Formmodul 36 auf, welches mit dem ersten Füllrohr 32 und dem zweiten Füllrohr 34 verbunden und dazu eingerichtet ist, die für die Hülle vorgesehene pastöse Masse und die für den Kern vorgesehene pastöse Masse zu einem gefüllten Lebensmittel zusammenzuführen und beispielsweise einen kontinuierlichen Strang abzugeben. Vorliegend ist das Vorsatzgerät 10 bevorzugt als eine Trenneinrichtung ausgebildet und ferner dazu eingerichtet, anstatt eines kontinuierlichen Strangs Portionen des gefüllten Nahrungsmittels durch Trennen des kontinuierlichen Strangs bereitzustellen.

Wie in Fig. 3 ersichtlich, ist das Bedienfeld 24 der ersten Füllmaschine 1 einfach zugänglich und das Bedienfeld 28 der zweiten Füllmaschine 4 hingegen aufgrund des Verlaufs der Füllrohre 32, 34 und der Anordnung des Vorsatzgeräts 10 erschwert.

Die Datenschnittstelle 8 ist ferner dazu eingerichtet, bei eine dritte Datenleitung 38 das Vorsatzgerät 10 mit der ersten Füllmaschine 1 und der zweiten Füllmaschine 4 steuerungstechnisch zu verbinden.

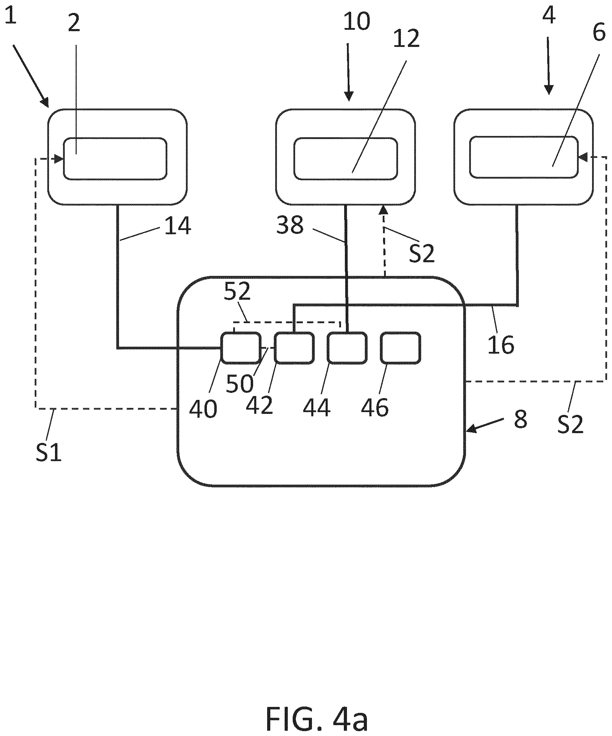

Wie in der Prinzip-Skizze der Datenübertragung der Fülllinie 100` (vgl. Fig. 3) gemäß Fig. 4a gezeigt, ermöglicht die steuerungstechnische Verbindung der ersten Füllmaschine 1 und der zweiten Füllmaschine 4 über die Datenschnittstelle 8 den Betrieb der Maschinensteuerungen 2, 4 in zwei voneinander verschiedenen Soll-Steuerungsmodi durch Bereitstellung mindestens einer Steuerinformation S1, S2. Die Soll-Steuerungsmodi umfassen den zuvor beschriebenen Master-Steuerungsmodus und Slave-Steuerungsmodus.

In Fig. 4a weist die Datenschnittstelle 8 insgesamt vier Steckplätze 40, 42, 44, 46 auf. Die erste Maschinensteuerung 2 ist mit dem ersten Steckplatz 40 verbunden. Die zweite Maschinensteuerung 6 ist mit dem zweiten Steckplatz 42 verbunden. Die dritte Maschinensteuerung 12 ist über eine dritte Datenleitung 38 mit dem dritten Steckplatz 44 verbunden. Die Datenschnittstelle 8 ist vorliegend dazu eingerichtet, die erste Steuerinformation S1 bereitzustellen, welches einen Soll-Betrieb im Master-Steuerungsmodus anzeigt. Die erste Steuerinformation S1 ist dabei vorliegend dem ersten Steckplatz 40 zugeordnet, sodass die Datenschnittstelle 8 bei Verbindung der ersten Maschinensteuerung 2 mit dem ersten Steckplatz 40 die Steuerinformation S1 der ersten Maschinensteuerung 2 bereitstellt.

Ferner ist die Datenschnittstelle 8 dazu eingerichtet, eine zweite Steuerinformation S2 bereitzustellen, welches einen Soll-Betrieb im Slave-Steuerungsmodus anzeigt. Die zweite Steuerinformation S2 ist dem zweiten Steckplatz 42 zugeordnet, sodass die Datenschnittstelle 8 bei Verbindung der zweiten Maschinensteuerung 6 mit dem zweiten Steckplatz 42 dazu eingerichtet ist, die zweite SteuerinformationS2 der zweiten Maschinensteuerung 6 bereitzustellen. Die Bereitstellung der ersten Steuerinformation S1 erfolgt dabei über eine erste Datenleitung 14 und die Bereitstellung der zweiten Steuerinformation S2 erfolgt dabei über eine Datenleitung 16.

Ferner ist die Datenschnittstelle 8 dazu eingerichtet, auch der dritten Maschinensteuerung 12 des Vorsatzgerätes 10 eine zweite Steuerinformation S2 - also ein den Soll-Betrieb im Slave-Steuerungsmodus anzeigendes Signal - bereitzustellen. Die zweite Steuerinformation S2 ist neben dem zweiten Steckplatz 42 auch dem dritten Steckplatz 44 zugeordnet, sodass die Datenschnittstelle 8 bei Verbindung der dritten Maschinensteuerung 12 mit dem dritten Steckplatz 44 ebenfalls eine zweite Steuerinformation S2 bereitstellt.

Der erste Steckplatz 40 und der zweite Steckplatz 42 sind steuerungstechnisch über eine erste Signalverbindung 50 miteinander verbunden. Ferner sind der erste Steckplatz 40 und der dritte Steckplatz 44 steuerungstechnisch über eine erste Signalverbindung 52 miteinander verbunden. Über die Datenleitungen 14, 16, 38 sowie die Signalverbindungen 50, 52 werden in Echtzeit rezeptrelevante Prozessparameter von der zweiten Maschinensteuerung 6 im Slave-Steuerungsmodus an die erste Maschinensteuerung 2 bereitgestellt. Die Bereitstellung erfolgt bevorzugt vor Produktionsstart und auch im laufenden Betrieb.

Nach Empfang der ersten Steuerinformation S1, welches einen Soll-Betrieb im Master-Steuerungsmodus anzeigt, ist die erste Maschinensteuerung 2 bevorzugt dazu eingerichtet, mittels einer Scanfunktion 19 die Belegung weiterer Steckplätze 42, 44, 46 abzufragen.

In bevorzugten Ausführungsbeispielen ist die erste Maschinensteuerung 2 im Master-Steuerungsmodus auch zur Durchführung entweder einer Zustandsüberwachung der zweiten Füllmaschine 4 und/oder des Vorsatzgerätes 10 oder aber einer Prozessüberwachung der gesamten Fülllinie 100` (vgl. Fig. 3) eingerichtet. In diesem Zusammenhang ist die erste Maschinensteuerung 2 insbesondere auch dazu eingerichtet, Diagnosedaten und/oder Fehlermeldungen der zweiten Maschinensteuerung 6 und der dritten Maschinensteuerung 12 zu empfangen und zu verarbeiten. Die erste Maschinensteuerung 2 ist dazu eingerichtet, die zweite Füllmaschine 4 bzw. das Vorsatzgerät 10 abhängig von diesen verarbeiteten Diagnosedaten und/oder Fehlermeldungen anzuhalten, auszuschalten oder bei Bedarf rezeptrelevante Prozessparameter anzupassen.

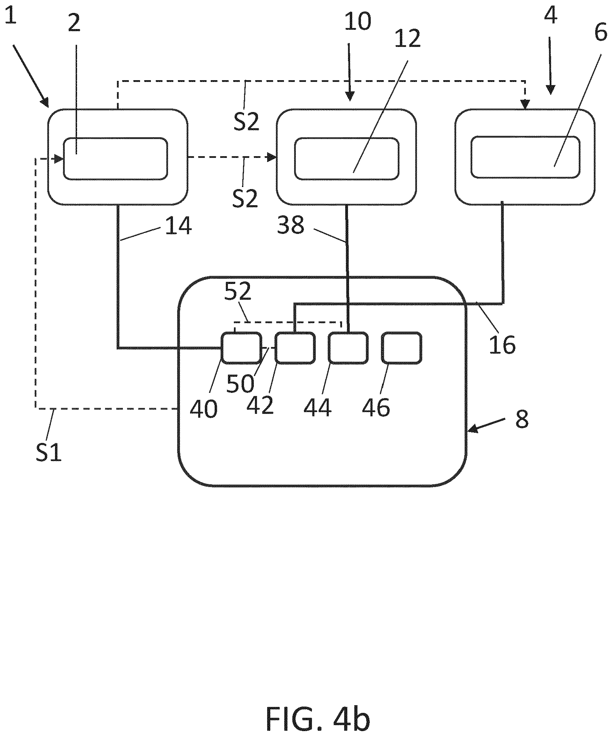

Fig. 4b zeigt eine Prinzip-Skizze der Datenübertragung der Fülllinie 100` (vgl. Fig. 3) gemäß einer zweiten Ausführungsform. Gleiche bzw. ähnliche Einheiten haben in den Figuren 4a und 4b identische Bezugszeichen. Es wird umfassend auf die Beschreibung des Ausführungsbeispiels gemäß Fig. 4a verwiesen und lediglich auf die Unterschiede der Ausführungsbeispiele im Folgenden detailliert eingegangen.

Die Ausführungsbeispiele gemäß den Figuren 4a und 4b unterscheiden sich durch die Art der Bereitstellung der zweiten Steuerinformation S2. Die erste Steuerinformation S1 wird in beiden Ausführungsbeispielen durch die Datenschnittstelle 8 der ersten Maschinensteuerung 2 bereitgestellt. Die erste Maschinensteuerung 2 gemäß Fig. 4b ist daraufhin dazu eingerichtet, der zweiten Maschinensteuerung 4 und der dritten Maschinensteuerung 12 eine zweite Steuerinformation S2 bereitzustellen. Diese zweite Steuerinformation S2 zeigt vorliegend einen Soll-Betrieb im Slave-Steuerungsmodus an. Die Bereitstellung der zweiten Steuerinformation S2 durch die erste Maschinensteuerung 2 kann sowohl über die Datenleitungen 14, 16, 38 und die Datenschnittstelle 8 erfolgen als auch kabellos über eine Bluetooth-Verbindung oder eine Funkverbindung zwischen der ersten Maschinensteuerung 2 sowie der zweiten Maschinensteuerung 6 und der dritten Maschinensteuerung 12.

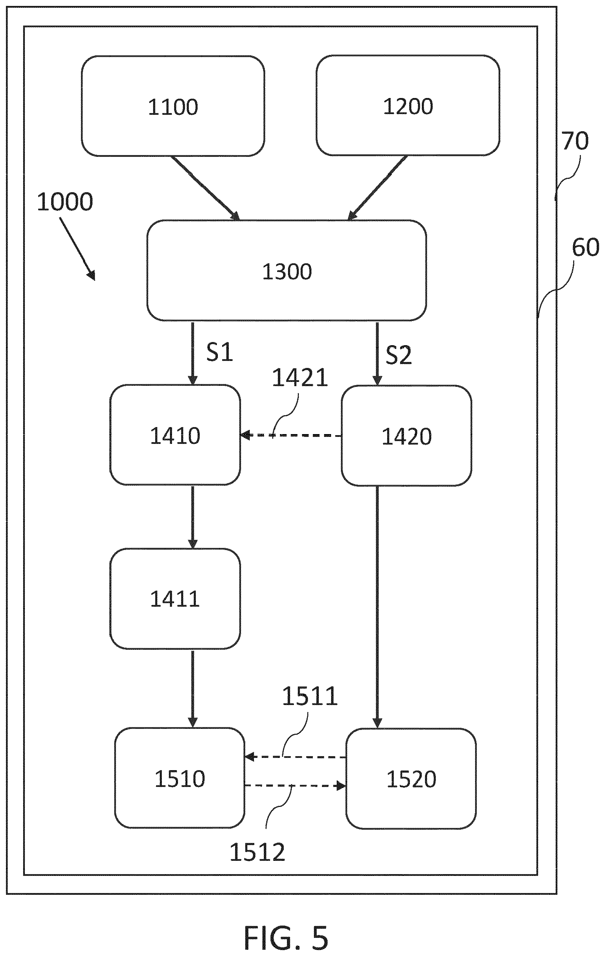

Fig. 5 zeigt ein Verfahren 1000 zum Betrieb einer Fülllinie gemäß Fig. 1 schematisch. Das Verfahren 1000 wird bevorzugt durch ein Computerprogramm 60 auf einem Prozessor 70 ausgeführt.

Das Verfahren 1000 umfasst das steuerungstechnische Verbinden einer ersten Maschinensteuerung 2 (vgl. Fig. 1) einer Füllmaschine mit einer Datenschnittstelle in Schritt 1100. Das Verfahren 1000 umfasst ferner das steuerungstechnische Verbinden einer zweiten Maschinensteuerung 6 (vgl. Fig. 1) einer zweiten Füllmaschine 4 mit der Datenschnittstelle in Schritt 1100. Ferner umfasst das Verfahren die Bereitstellung einer Steuerinformation S1 vorliegend an der ersten Maschinensteuerung 2 (vgl. Fig. 1, 2a, 2b) in Schritt 1300. Auf das Bereitstellen der Steuerinformation in Schritt 1300 folgend, umfasst das Verfahren 1000 das Initialisieren eines ersten Soll-Steuerungsmodus in der ersten Maschinensteuerung 2 (vgl. Fig. 1) in Schritt 1410. Der erste Soll-Steuerungsmodus ist vorliegend ein Master-Steuerungsmodus, welcher durch die erste Steuerinformation S1 angezeigt wird. Weiterhin umfasst das Verfahren 1000 das Initialisieren eines zweiten Soll-Steuerungsmodus in der zweiten Maschinensteuerung 6 (vgl. Fig. 1) in Schritt 1420 abhängig von der bereitgestellten zweiten Steuerinformation S2 in Schritt 1420. Der zweite Soll-Steuerungsmodus ist vorliegend ein Slave-Steuerungsmodus. Die zweite Maschinensteuerung 6 (vgl. Fig. 1) ist in dem Slave-Steuerungsmodus dazu eingerichtet, Lese- und Schreibrechte, insbesondere vollumfängliche Lese- und Schreibrechte, bezüglich rezeptrelevanter Prozessparameter an die erste Maschinensteuerung 2 (vgl. Fig. 1) zu übertragen in Schritt 1421. Die erste Maschinensteuerung 2 (vgl. Fig. 1) ist im Master-Steuerungsmodus dazu eingerichtet, die übertragenen Lese- und Schreibrechte in Schritt 1411 zu implementieren. Diese Implementierung umfasst insbesondere das Sichtbarmachen der Prozessparameter auf einer Anzeigeeinheit 26 und die Einstellbarkeit über ein Bedienfeld 24 (vgl. Fig. 1). Die Anzeigefunktion der ersten Maschinensteuerung 2 bzw. deren Anzeigeeinheit 26 (vgl. Fig. 1) wird somit um die implementierten Prozessparameter erweitert.

Ferner umfasst das Verfahren 1000 das reziproke Betreiben der ersten Maschinensteuerung 2 (vgl. Fig. 1) im Master-Steuerungsmodus in Schritt 1510 und das Betreiben der zweiten Maschinensteuerung 6 (vgl. Fig. 1) im Slave-Steuerungsmodus in Schritt 1520. Während des Betriebs im Master-Steuerungsmodus ist die erste Maschinensteuerung 2 (vgl. Fig. 1) dazu eingerichtet, rezeptrelevante Prozessparameter zu überschreiben in Schritt 1512 und fortlaufend im Betrieb auszulesen in Schritt 1511.

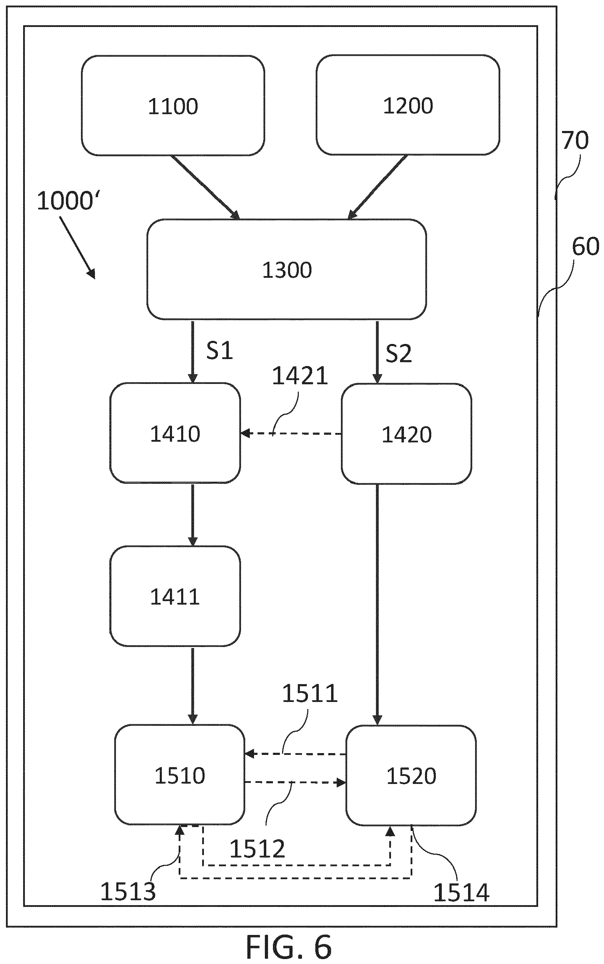

Fig. 6 zeigt Verfahren 1000', welches eine Weiterentwicklung des Verfahrens 1000 gemäß Fig. 5 ist. Das Verfahren 1000` wird bevorzugt durch ein Computerprogramm 60 auf einem Prozessor 70 ausgeführt.

Das Verfahren 1000' unterscheidet sich von dem Verfahren 1000 lediglich durch eine Funktionserweiterung der ersten Maschinensteuerung 2 (vgl. Fig. 1) im Master-Steuerungsmodus. Es wird vorliegend auf die vorstehende Beschreibung des Verfahrens gemäß Fig. 5 Bezug genommen und lediglich auf die Unterschiede der Prozessschritte eingegangen.

Abweichend zu dem Verfahren gemäß Fig. 5 ist die erste Maschinensteuerung 2 vorliegend beim Betrieb im Master-Steuerungsmodus gemäß Schritt 1510 dazu eingerichtet, ferner eine Zustandsüberwachung der zweiten Füllmaschine fortlaufend durchzuführen sowie zur Durchführung von Diagnoseprozessen basierend auf der Zustandsüberwachung in Schritt 1513. Anhand der Diagnoseprozesse ist die erste Maschinensteuerung 2 im Master-Steuerungsmodus ferner dazu eingerichtet, die zweite Füllmaschine 4 im Störfall auszuschalten, anzuhalten bzw. bedarfsgerecht rezeptrelevante Prozessparameter anzupassen gemäß Schritt 1514. Die Anpassung rezeptrelevanter Prozessparameter sowie das bedarfsweise Anhalten oder Ausschalten betrifft in gleicher Weise den Betrieb der ersten Füllmaschine, welcher ebenfalls durch die erste Maschinensteuerung 2 (vgl. Fig. 1) gesteuert wird.

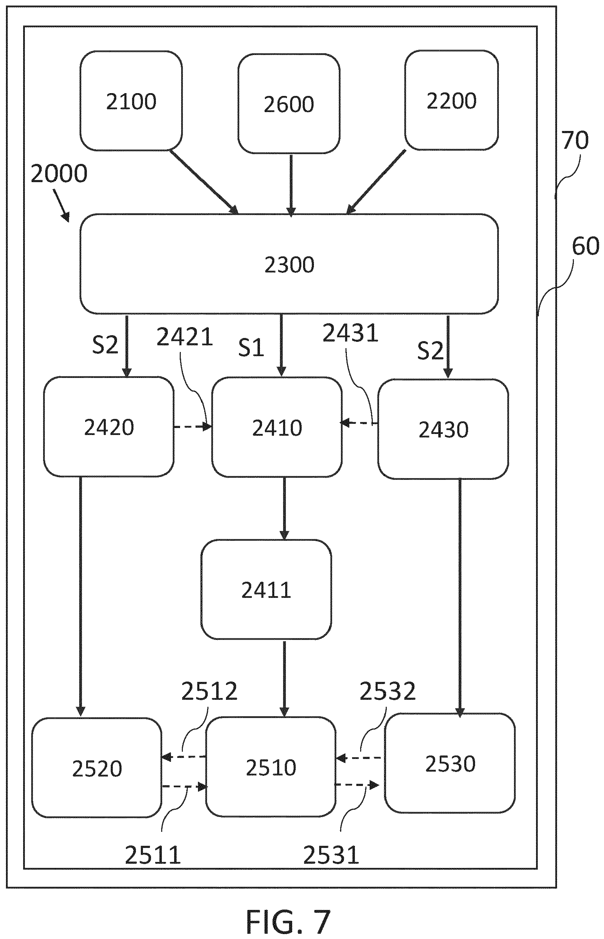

Fig. 7 zeigt ein Verfahren 2000 zum Betrieb einer Fülllinie gemäß Fig. 3. Das Verfahren 2000 wird bevorzugt durch ein Computerprogramm 60 auf einem Prozessor 70 ausgeführt.

Das Verfahren 2000 umfasst das steuerungstechnische Verbinden einer ersten Maschinensteuerung 2 einer Füllmaschine 1 mit einer Datenschnittstelle 8 (vgl. Fig. 3) in Schritt 2100. Das Verfahren 2000 umfasst ferner das steuerungstechnische Verbinden einer zweiten Maschinensteuerung 6 einer zweiten Füllmaschine 4 mit der Datenschnittstelle 8 (vgl. Fig. 3) in Schritt 2100. Weiterhin umfasst Verfahren 2000 das steuerungstechnische Verbinden einer dritten Maschinensteuerung 12 eines Vorsatzgerätes 10 mit der Datenschnittstelle 8 (vgl. Fig. 3) in Schritt 2600.

Ferner umfasst das Verfahren 2000 die Bereitstellung einer SteuerinformationS1 vorliegend an der ersten Maschinensteuerung 2 (vgl. Fig. 4a, 4b) in Schritt 2300. Auf das Bereitstellen der Steuerinformation S1 in Schritt 2300 folgend, umfasst das Verfahren 2000 das Initialisieren eines ersten Soll-Steuerungsmodus in der ersten Maschinensteuerung 2 (vgl. Fig. 3) in Schritt 2410. Der erste Soll-Steuerungsmodus ist vorliegend ein Master-Steuerungsmodus, welcher durch die erste Steuerinformation S1 angezeigt wird. Weiterhin umfasst das Verfahren 2000 das Initialisieren eines zweiten Soll-Steuerungsmodus in der zweiten Maschinensteuerung 6 in Schritt 2420 sowie der dritten Maschinensteuerung 12 (vgl. Fig. 3) in Schritt 2430 abhängig von der bereitgestellten zweiten Steuerinformation S2. Der zweite Soll-Steuerungsmodus ist vorliegend ein Slave-Steuerungsmodus. Die zweite Maschinensteuerung 6 sowie die dritte Maschinensteuerung 12 (vgl. Fig. 3) sind in dem Slave-Steuerungsmodus dazu eingerichtet, Lese- und Schreibrechte bezüglich rezeptrelevanter Prozessparameter an die erste Maschinensteuerung 2 (vgl. Fig. 3) zu übertragen in Schritt 2421 und Schritt 2431. Die erste Maschinensteuerung 2 (vgl. Fig. 3) ist im Master-Steuerungsmodus dazu eingerichtet, die übertragenen Lese- und Schreibrechte in Schritt 2411 zu implementieren. Diese Implementierung umfasst insbesondere das Sichtbarmachen der Prozessparameter auf einer Anzeigeeinheit 26 und die Einstellbarkeit über ein Bedienfeld 24 gemäß Fig. 2. Die Darstellung der mit der ersten Maschinensteuerung 2 kooperierenden Anzeigeeinheit 26 (vgl. Fig. 3) wird somit um die implementierten Prozessparameter erweitert.

Ferner umfasst das Verfahren 2000 das reziproke Betreiben der ersten Maschinensteuerung 2 im Master-Steuerungsmodus in Schritt 2510, das Betreiben der zweiten Maschinensteuerung 6 im Slave-Steuerungsmodus in Schritt 2520 und das Betreiben der dritten Maschinensteuerung 12 (vgl. Fig. 3) im Slave-Steuerungsmodus in Schritt 2530. Während des Betriebs im Master-Steuerungsmodus ist die erste Maschinensteuerung 2 (vgl. Fig. 3) dazu eingerichtet, rezeptrelevante Prozessparameter zu überschreiben in Bezug auf die zweite Maschinensteuerung in Schritt 2512 und in Bezug auf die dritte Maschinensteuerung in Schritt 2532. Ferner ist die erste Maschinensteuerung 2 (vgl. Fig. 3) dazu eingerichtet, rezeptrelevante Prozessparameter fortlaufend im Betrieb auszulesen in Bezug auf die zweite Maschinensteuerung in Schritt 2511 und in Bezug auf die dritte Maschinensteuerung Schritt 2531.

### Bezugszeichenliste

- 1: erste Füllmaschine
- 2: erste Maschinensteuerung
- 4: zweite Füllmaschine
- 6: zweite Maschinensteuerung
- 8: Datenschnittstelle
- 10: Vorsatzgerät, Trenneinrichtung
- 12: dritte Maschinensteuerung
- 14: erste Datenleitung
- 16: zweite Datenleitung
- 17: Gehäuse der ersten Füllmaschine
- 18: Trichter der ersten Füllmaschine
- 19: Scanfunktion
- 20: Gehäuse der zweiten Füllmaschine
- 21: Speichermedium
- 22: Trichter der zweiten Füllmaschine
- 24: erstes Bedienfeld
- 26: erste Anzeigeeinheit
- 28: zweites Bedienfeld
- 30: zweite Anzeigeeinheit
- 32: erstes Füllrohr
- 34: zweites Füllrohr
- 36: Formmodul
- 38: dritte Datenleitung
- 40: erster Steckplatz
- 42: zweiter Steckplatz
- 44: dritter Steckplatz
- 46: vierter Steckplatz
- 50: erste Signalverbindung
- 52: zweite Signalverbindung
- 60: Computerprogramm
- 70: Prozessor
- 100, 100`: Fülllinie
- 1000, 1000' 2000: Verfahren zum Betrieb einer Fülllinie
- 1100, 2100: steuerungstechnisches Verbinden einer ersten Maschinensteuerung
- 1200, 2200: steuerungstechnisches Verbinden einer zweiten Maschinensteuerung
- 1300, 2300: Bereitstellen einer Steuerinformation
- 1410, 2410: Initialisieren der ersten Maschinensteuerung
- 1411, 2411: Implementierung der übertragenen Lese- und Schreibrechte in die erste Maschinensteuerung
- 1420, 2420: Initialisieren der ersten Maschinensteuerung
- 1421, 2421: Übertragung von Lese- und Schreibrechten durch die zweite Maschinensteuerung
- 1510, 2510: Reziprokes Betreiben der ersten Maschinensteuerung im Master-Steuerungsmodus
- 1511, 2511: Lesen von rezeptrelevanten Prozessparametern der zweiten Maschinensteuerung
- 1512, 2512: Überschreiben von rezeptrelevanten Prozessparametern der zweiten Maschinensteuerung
- 1513: Zustands- und/oder Prozessüberwachung der zweiten Maschinensteuerung
- 1514: Anpassen von rezeptrelevanten Prozessparametern und/oder Anhalten der zweiten Maschinensteuerung
- 1520, 2520: Reziprokes Betreiben der zweiten Maschinensteuerung im Slave-Steuerungsmodus
- 1530: Reziprokes Betreiben der dritten Maschinensteuerung im Slave-Steuerungsmodus
- 2530: Reziprokes Betreiben der dritten Maschinensteuerung im Slave-Steuerungsmodus
- 2531: Lesen von rezeptrelevanten Prozessparametern der dritten Maschinensteuerung
- 2532: Überschreiben von rezeptrelevanten Prozessparametern der dritten Maschinensteuerung
- 2600: Initialisieren der ersten Maschinensteuerung der dritten Maschinensteuerung

## Patentansprüche

1. Fülllinie (100, 100') zum Herstellen von Nahrungsmitteln aus einer pastösen Masse, insbesondere gefüllten Nahrungsmitteln bzw. in Hüllen gefüllten Nahrungsmitteln, umfassend:
- eine erste Füllmaschine (1) mit einer ersten Maschinensteuerung (2),
- mindestens eine zweite Füllmaschine (4) mit einer zweiten Maschinensteuerung (6), die selektiv in Kooperation mit der ersten Füllmaschine (1) und unabhängig von der ersten Füllmaschine (1) betreibbar ist, und
- eine Datenschnittstelle (8) zum steuerungstechnischen Verbinden der ersten Maschinensteuerung (2) mit der zweiten Maschinensteuerung (6),
**dadurch gekennzeichnet, dass** die erste Maschinensteuerung (2) und die zweite Maschinensteuerung (6) dazu eingerichtet sind, abhängig von einer an der ersten Maschinensteuerung (2) und/oder der zweiten Maschinensteuerung (6) bereitgestellten Steuerinformation (S1), entweder in einem Slave-Steuerungsmodus oder in einem Master-Steuerungsmodus reziprok betrieben zu werden,
wobei der Slave-Steuerungsmodus eine Übertragung von Lese- und Schreibrechten, insbesondere vollumfänglichen Lese- und Schreibrechten, bezüglich rezeptrelevanter Prozessparameter an die im Master-Steuerungsmodus betriebene Maschinensteuerung (2, 6, 12) bewirkt, und der Master-Steuerungsmodus die Implementierung der übertragenen Lese- und Schreibrechte in die im Master-Steuerungsmodus betriebene Maschinensteuerung (2, 6, 12) bewirkt.

2. Fülllinie (100, 100') nach Anspruch 1,
wobei die Lese- und Schreibrechte ferner Maschinenkonfigurationen und/oder Betriebsmodi umfassen, und/oder
die Leserechte eine Zustandsüberwachung der im Slave-Steuerungsmodus betriebenen ersten Füllmaschine (1) bzw. zweite Füllmaschine (4) und/oder die Prozessüberwachung der gesamten Fülllinie (100, 100') umfassen.
wobei.

3. Fülllinie (100, 100') nach Anspruch 2,
wobei die Maschinensteuerungen (2, 6, 12) im Master-Steuerungsmodus durch die Zustandsüberwachung und/oder die Prozessüberwachung jeweils dazu eingerichtet sind, Diagnosedaten und/oder Fehlermeldungen der Maschinensteuerung (2, 6, 12) im Slave-Steuerungsmodus zu empfangen und zu verarbeiten.

4. Fülllinie (100, 100') nach einem der vorstehenden Ansprüche,
wobei die Datenschnittstelle (8) zur Echtzeit -Datenübertragung zwischen der ersten Maschinensteuerung (2) und der zweiten Maschinensteuerung (6) eingerichtet ist und insbesondere mindestens eines der folgenden umfasst:
- einen CAN-Bus und eine Busleitung,
- einen Ethercat und eine Ethernetleitung,
- einen Ether IP, und
- Ethernet mit einem potentialfreien Kontakt.

5. Fülllinie (100, 100') nach einem der vorstehenden Ansprüche
wobei die Steuerinformation (S1) eine erste Steuerinformation (S1), die einen Soll-Betrieb im Master-Steuerungsmodus anzeigt, und eine zweite Steuerinformation (S2) umfasst, das einen Soll-Betrieb im Slave-Steuerungsmodus anzeigt,
wobei die erste Maschinensteuerung (2) und die zweite Maschinensteuerung (6) im Master-Steuerungsmodus vorzugsweise dazu eingerichtet sind, die zweite Steuerinformation (S2) bereitzustellen, und
wobei die Fülllinie (100, 100') vorzugsweise ferner ein Computerprogramm (60) und einen Prozessor (70) zum Ausführen des Computerprogramms (60), welcher mit der ersten Maschinensteuerung (2) und/oder der zweiten Maschinensteuerung (6) verbunden und dazu eingerichtet ist, bei Ausführung des Computerprogramms (60) mindestens die erste Steuerinformation (S1) an der ersten Maschinensteuerung (2) und/oder der zweiten Maschinensteuerung (6) bereitzustellen.

6. Fülllinie (100, 100') nach einem der vorstehenden Ansprüche,
wobei die Datenschnittstelle (8) mindestens einen ersten Steckplatz (40) und einen zweiten Steckplatz (42) aufweist, und die Steuerinformation (S1) dem ersten Steckplatz (40) zugeordnet ist, insbesondere ist die erste Steuerinformation (S1) dem ersten Steckplatz (40) zugeordnet ist und die zweite Steuerinformation (S2) dem zweiten Steckplatz (42) zugeordnet, und/oder
wobei die erste Maschinensteuerung (2) und die zweite Maschinensteuerung (6) jeweils eine Scanfunktion (19) aufweisen und dazu eingerichtet sind, bei Verbindung mit der Datenschnittstelle (8) die dem Steckplatz (40, 42, 44, 46) zugeordnete Steuerinformation (S1, S2) abzufragen, und/oder
wobei die erste Maschinensteuerung (2) und die zweite Maschinensteuerung (6) ferner dazu eingerichtet sind, jeweils über eine bzw. die Scanfunktion (19) eine Steckplatzbelegung über die Datenschnittstelle (8) abzufragen und für den Fall, dass der erste Steckplatz und der zweite Steckplatz (42) belegt sind, abhängig von der Steuerinformation in den Master-Steuerungsmodus oder in den Slave-Steuerungsmodus zu schalten.

7. Fülllinie (100, 100') nach Anspruch 5 oder 6,
wobei die Datenschnittstelle (8) ein Speichermedium (21) zum Speichern der Zuordnung der Steuerinformation (S1) zu dem ersten Steckplatz (40) aufweist, und zur Bereitstellung und Übertragung der Steuerinformation (S1) an die mit dem ersten Steckplatz (40) verbundene erste Maschinensteuerung (2) oder zweite Maschinensteuerung (6) eingerichtet ist.

8. Fülllinie (100, 100') nach einem der vorstehenden Ansprüche,
wobei die erste Füllmaschine (1) ein erstes Bedienfeld (24) aufweist und die zweite Füllmaschine (4) ein zweites Bedienfeld (28) aufweist, wobei die Maschinensteuerungen (2, 6, 12) jeweils dazu eingerichtet sind, das Bedienfeld (24, 28) der im Slave-Steuerungsmodus betriebenen ersten Füllmaschine (1) bzw. zweite Füllmaschine (4) zu sperren,
wobei das erste Bedienfeld (24) vorzugsweise dazu eingerichtet ist, durch manuelle Eingabe die Steuerinformation, insbesondere erste Steuerinformation (S1), an der ersten Maschinensteuerung (2) bereitzustellen, und das zweite Bedienfeld (28) vorzugsweise dazu eingerichtet ist, durch manuelle Eingabe die Steuerinformation, insbesondere erste Steuerinformation (S1), an der zweiten Maschinensteuerung (6) bereitzustellen, und/oder
wobei die erste Füllmaschine (1) und die zweite Füllmaschine (4) jeweils eine mit der Maschinensteuerung (2, 6, 12) und dem Bedienfeld (24, 28) kooperierende Anzeigeeinheit (26, 30) aufweisen und die Anzeigeeinheiten (28, 30) im Master-Steuerungsmodus dazu eingerichtet sind, die implementierten Lese- und Schreibrechte und die Lese- und Schreibrechte der Maschinensteuerung (2, 6, 12) im Master-Steuerungsmodus anzuzeigen.

9. Fülllinie (100, 100') nach einem der vorstehenden Ansprüche, ferner umfassend:
- ein Vorsatzgerät mit einer dritten Maschinensteuerung, welche über die Datenschnittstelle (8) steuerungstechnisch mit der ersten Maschinensteuerung (2) und mit der zweiten Maschinensteuerung (6) verbunden ist,
wobei die dritte Maschinensteuerung (2, 6, 12) dazu eingerichtet ist, bei steuerungstechnischer Verbindung über die Datenschnittstelle (8) abhängig von der bereitgestellten Steuerinformation im Slave-Steuerungsmodus betrieben zu werden, wobei immer zwei der drei Maschinensteuerungen (2, 6, 12) im Slave-Steuerungsmodus betrieben werden.

10. Fülllinie (100, 100') nach einem der vorstehenden Ansprüche,
wobei die erste Maschinensteuerung (2) und die zweite Maschinensteuerung (6), insbesondere auch die dritte Maschinensteuerung, im Master-Steuerungsmodus dazu eingerichtet sind, bei Überschreiben eines ersten rezeptrelevanten Prozessparameters sämtliche der mit dem überschriebenen ersten rezeptrelevanten Prozessparameter assoziierten rezeptrelevanten Prozessparameter mindestens der ersten Füllmaschine (1) und der zweite Füllmaschine (4) zu identifizieren und korrespondierend zu dem ersten rezeptrelevanten Prozessparameter anzupassen.

11. Verfahren (1000, 1000', 2000) zum Betrieb einer Fülllinie (100, 100'), insbesondere einer Fülllinie (100, 100') nach einem der vorstehenden Ansprüche, umfassend die Schritte:
a) steuerungstechnisches Verbinden einer ersten Maschinensteuerung (2) einer ersten Füllmaschine (1) mit einer Datenschnittstelle (1100),
b) steuerungstechnisches Verbinden einer zweiten Maschinensteuerung (6) einer zweiten Füllmaschine (4), insbesondere einer zweiten Füllmaschine, mit der Datenschnittstelle (1200),
c) Bereitstellen einer Steuerinformation an der ersten Maschinensteuerung (2) und/oder der zweiten Maschinensteuerung (1300),
d) Initialisieren eines ersten Soll-Steuerungsmodus in der ersten Maschinensteuerung (1410) und eines zweiten Soll-Steuerungsmodus in der zweiten Maschinensteuerung (1420) abhängig der bereitgestellten Steuerinformation, wobei die zwei Soll-Steuerungsmodi einen Master-Steuerungsmodus und einen Slave-Steuerungsmodus umfassen,
wobei die Initialisierung des Slave-Steuerungsmodus die Übertragung von Lese- und Schreibrechten (1421), insbesondere vollumfänglichen Lese- und Schreibrechten bezüglich rezeptrelevanter Prozessparameter an die im Master-Steuerungsmodus betriebene Maschinensteuerung, und
wobei die Initialisierung des Master-Steuerungsmodus die Implementierung der übertragenen Lese- und Schreibrechte in die im Master-Steuerungsmodus betriebene Maschinensteuerung (2, 6, 12) umfasst (1411, 2411),
e) Reziprokes Betreiben der ersten Maschinensteuerung (1510, 2510) und der zweiten Maschinensteuerung (1520, 2520) entweder in einem Master-Steuerungsmodus oder in einem Slave-Steuerungsmodus, umfassend das Auslesen (1511, 2511) und Überschreiben (1512, 2512) der rezeptrelevanten Prozessparameter der ersten Füllmaschine und der zweiten Füllmaschine (4, 10) von der Maschinensteuerung (2, 6, 12) im Master-Steuerungsmodus.

12. Verfahren (1000') nach Anspruch 11,
wobei die Leserechte eine Zustandsüberwachung der im Slave-Steuerungsmodus betriebenen ersten Füllmaschine (1) bzw. zweite Füllmaschine (4) und/oder die Prozessüberwachung der gesamten Fülllinie (100, 100') umfassen, und
das Betreiben der ersten Maschinensteuerung (2) bzw. der zweiten Maschinensteuerung (6)
im Master-Steuerungsmodus ferner die Schritte umfasst:
e1) Empfangen und Verarbeiten von Diagnosedaten und/oder Fehlermeldungen der Maschinensteuerung (2, 6, 12) im Slave-Steuerungsmodus durch die Zustandsüberwachung und/oder die Prozessüberwachung (1513),
e2) Abschalten der zweiten Füllmaschine (4) bzw. Füllmaschine (4) im Slave-Steuerungsmodus, oder
e3) Anhalten der zweiten Füllmaschine (4) bzw. Füllmaschine (4) im Master-Steuerungsmodus und/oder im Slave-Steuerungsmodus,
e4) Anpassen von rezeptrelevanten Prozessparametern in den Rezepteinstellungen durch Nutzung der Lese- und Schreibrechte (1514).

13. Verfahren (1000, 1000', 2000) nach Anspruch 11 oder 12,
wobei die Datenschnittstelle (8) mindestens einen ersten Steckplatz (40), dem die Steuerinformation zugeordnet ist, und einen zweiten Steckplatz (42) aufweist, und Schritt c) umfasst:
c1) Übertragung (1421, 2421, 2431) der Steuerinformation bei Verbindung mit dem ersten Steckplatz (40) durch die die Datenschnittstelle (8), oder
c2) Abfragen der dem ersten Steckplatz (40) zugeordneten Steuerinformation durch eine Scanfunktion (19) der ersten Maschinensteuerung (2) und der zweiten Maschinensteuerung (6), oder
wobei Schritt c) ferner umfasst:
c3) Bereitstellen der Steuerinformation an der ersten Maschinensteuerung (2) und/oder der zweiten Maschinensteuerung (6) durch eine manuelle Eingabe über ein Bedienfeld umfasst.

14. Verfahren (1000, 1000', 2000) nach einem der Ansprüche 11 bis 13,
wobei die Steuerinformation eine erste Steuerinformation (S1) ist, das einen Soll-Betrieb im Master-Steuerungsmodus anzeigt, und wobei Schritt c) ferner umfasst:
c4) Bereitstellen einer zweiten Steuerinformation (S2), das einen Soll-Betrieb im Slave-Steuerungsmodus anzeigt, durch die im Master-Steuerungsmodus betriebene bzw. zu betreibende Maschinensteuerung.

15. Verfahren (1000, 1000', 2000) nach einem der Ansprüche 11 bis 14,
wobei die Lese- und Schreibrechte Maschinenkonfigurationen und/oder Betriebsmodi umfassen, und der Betrieb der ersten Maschinensteuerung (2) bzw. der zweiten Maschinensteuerung (6) im Master-Steuerungsmodus folgende Schritte umfasst:
e5) Auslesen und Überschreiben der Maschinenkonfigurationen und/oder Betriebsmodi der ersten Füllmaschine (1) und der zweiten Füllmaschine (4) von der Maschinensteuerung (2, 6, 12) im Master-Steuerungsmodus.
